# EUROPEAN PATENT APPLICATION

(11) **EP 4 632 511 A1**
(43) Date of publication of application: **15.10.2025**
(21) Application number: 23950735.3
(22) Date of filing: 30.08.2023
(51) Int. Cl.: G05B 19/404, B23Q 7/04, B23Q 15/20, G05B 19/4155, G05B 19/416

(54) **PROCESSING SYSTEM, MACHINE TOOL SYSTEM, AND WORKPIECE PROCESSING METHOD**

(71) Applicant: Yamazaki Mazak Corporation, Niwa-gun, Aichi 480-0197 (JP)
(72) Inventor: MARUTA, Kazumasa, Niwa-gun, Aichi 480-0197 (JP); MATSUDA, Tatsuya, Niwa-gun, Aichi 480-0197 (JP); BABA, Hirotaka, Niwa-gun, Aichi 480-0197 (JP)
(74) Representative: TBK
(86) International application number: PCT/JP2023/031487
(87) International publication number: WO 2025/046787

(57) **Abstract**

A processing system includes a robot, a robot controller, a numerical controller, and a machine tool. The robot is configured to load a workpiece onto the machine tool. The robot controller is configured to, when a weight of the workpiece is defined as a first weight, set workpiece weight data indicating the first weight as one of control parameters of the robot, and control a loading operation of the robot, based on the control parameters and loading path data that specifies a loading path of the workpiece. The numerical controller is configured to transmit the workpiece weight data or first basic data for calculating the first weight to the robot controller and generate an operation command by executing a processing program. The machine tool is configured to process the workpiece into a product, based on the operation command.

## Description

### Technical Field

The present invention relates to a processing system, a machine tool system, and a workpiece processing method.

### Background Art

A technique of loading a workpiece onto a machine tool using a robot is known.

A related technique includes a robot loader controller disclosed in Patent Literature 1. The robot loader controller disclosed in Patent Literature 1 includes a motion pattern storing unit and a motion pattern determining unit. The motion pattern storing unit previously stores a motion path of a workpiece as a motion pattern. The motion pattern determining unit determines the motion pattern in accordance with a determination condition. The robot loader controller automatically determines a motion pattern appropriate as a workpiece motion position path, based on workpiece data received from a processing machine, reference position data of a machine and a robot loader, and a predetermined determination condition.

### Citation List

### Patent Literature

PTL 1: JP H5-108135 A.

### Summary of Invention

### Technical Problem

An object of the present invention is to provide a processing system, a machine tool system, and a workpiece processing method that are capable of reducing workload when workpiece weight data is set in a robot controller.

### Solution to Problem

A processing system according to some embodiments includes a robot, a robot controller, a numerical controller, and a machine tool. The robot is configured to load a workpiece onto the machine tool. The robot controller is configured to, when a weight of the workpiece is defined as a first weight, set workpiece weight data indicating the first weight as one of control parameters of the robot, and control a loading operation of the robot, based on the control parameters and loading path data that specifies a loading path of the workpiece. The numerical controller is configured to transmit the workpiece weight data or first basic data for calculating the first weight to the robot controller and generate an operation command by executing a processing program. The machine tool is configured to process the workpiece into a product, based on the operation command.

A machine tool system according to some embodiments includes a machine tool and a numerical controller. The machine tool is configured to receive a workpiece from a robot controlled by a robot controller and process the workpiece into a product, based on an operation command received from the numerical controller. The numerical controller is configured to, when a weight of the workpiece is defined as a first weight, transmit workpiece weight data indicating the first weight or first basic data for calculating the first weight to the robot controller such that the workpiece weight data is set as one of control parameters of the robot, and generate the operation command by executing a processing program.

A workpiece processing method according to some embodiments includes calculating, by at least one of a robot controller, a numerical controller, a simulator, and a CAD/CAM system, a volume of a workpiece, based on shape data of the workpiece. A weight of the workpiece is calculated, by at least one of the robot controller, the numerical controller, the simulator, and the CAD/CAM system, based on the volume of the workpiece that has been calculated and workpiece density data indicating a density of a material constituting the workpiece. The weight of the workpiece that has been calculated is set, by the robot controller, as one of control parameters of a robot. A loading operation command is generated, by the robot controller, based on the control parameters and loading path data. The workpiece is loaded onto a machine tool by the robot that receives the loading operation command. An operation command is generated by the numerical controller by executing a processing program associated with the workpiece. The workpiece is processed into a product by the machine tool that receives the operation command.

### Effects of Invention

The present invention provides a processing system, a machine tool system, and a workpiece processing method that are capable of reducing workload when workpiece weight data is set in a robot controller.

### Brief Description of Drawings

[FIG. 1] FIG. 1 is a diagram schematically illustrating a processing system according to a first embodiment.
[FIG. 2] FIG. 2 is a diagram schematically illustrating the processing system according to the first embodiment.
[FIG. 3] FIG. 3 is a table illustrating an example of control parameters.
[FIG. 4] FIG. 4 is a diagram schematically illustrating a state in which workpiece weight data is transmitted from a numerical controller to a robot controller.
[FIG. 5] FIG. 5 is a diagram schematically illustrating a state in which first basic data for calculating the weight of a workpiece is transmitted from the numerical controller to the robot controller.
[FIG. 6] FIG. 6 is a diagram schematically illustrating a state in which the numerical controller is capable of controlling control target devices.
[FIG. 7] FIG. 7 is a diagram schematically illustrating the processing system according to the first embodiment.
[FIG. 8] FIG. 8 is a diagram schematically illustrating the processing system according to the first embodiment.
[FIG. 9] FIG. 9 is a table illustrating an example of the control parameters.
[FIG. 10] FIG. 10 is a table illustrating an example of the control parameters.
[FIG. 11] FIG. 11 is a diagram schematically illustrating a state in which product weight data is transmitted from the numerical controller to the robot controller.
[FIG. 12] FIG. 12 is a diagram schematically illustrating a state in which second basic data for calculating the weight of a product is transmitted from the numerical controller to the robot controller.
[FIG. 13] FIG. 13 is a diagram schematically illustrating the processing system according to the first embodiment.
[FIG. 14] FIG. 14 is a table illustrating an example of the control parameters.
[FIG. 15] FIG. 15 is a table illustrating an example of the control parameters.
[FIG. 16] FIG. 16 is a diagram schematically illustrating a state in which the numerical controller is communicable with the robot controller.
[FIG. 17] FIG. 17 is a diagram schematically illustrating a state in which the robot controller is capable of controlling a robot.
[FIG. 18] FIG. 18 is a diagram schematically illustrating an example of the numerical controller.
[FIG. 19] FIG. 19 is a diagram schematically illustrating an example of the numerical controller.
[FIG. 20] FIG. 20 is a diagram schematically illustrating a state in which the numerical controller is capable of receiving data from a simulator.
[FIG. 21] FIG. 21 is a diagram schematically illustrating an example of the simulator.
[FIG. 22] FIG. 22 is a diagram schematically illustrating a state in which the numerical controller is capable of receiving data from the simulator.
[FIG. 23] FIG. 23 is a diagram schematically illustrating a state in which the numerical controller is capable of receiving data from the simulator.
[FIG. 24] FIG. 24 is a diagram schematically illustrating a state in which the numerical controller is capable of receiving data from a CAD/CAM system.
[FIG. 25] FIG. 25 is a diagram schematically illustrating an example of the CAD/CAM system.
[FIG. 26] FIG. 26 is a diagram schematically illustrating an example of a procedure in which the workpiece weight data is derived by the numerical controller.
[FIG. 27] FIG. 27 is a table schematically illustrating associated data that associates a plurality of materials and densities of the plurality of materials.
[FIG. 28] FIG. 28 is a diagram schematically illustrating a state in which shape data of a workpiece is inputted.
[FIG. 29] FIG. 29 is a diagram schematically illustrating a state in which data for generating a processing program is inputted.
[FIG. 30] FIG. 30 is a diagram schematically illustrating a state in which data for generating the processing program is inputted.
[FIG. 31] FIG. 31 is a diagram schematically illustrating an example of a procedure in which the product weight data is derived by the numerical controller.
[FIG. 32] FIG. 32 is a diagram schematically illustrating an example of the CAD/CAM system.
[FIG. 33] FIG. 33 is a diagram schematically illustrating an example of the numerical controller.
[FIG. 34] FIG. 34 is a diagram schematically illustrating an example of the numerical controller.
[FIG. 35] FIG. 35 is a diagram schematically illustrating a state in which the machine tool includes a work holder and a second work holder.
[FIG. 36] FIG. 36 is a diagram schematically illustrating a machine tool system according to a second embodiment.
[FIG. 37] FIG. 37 is a diagram schematically illustrating a state in which the numerical controller is capable of controlling the control target devices.
[FIG. 38] FIG. 38 is a flowchart illustrating an example of a workpiece processing method according to a third embodiment.
[FIG. 39] FIG. 39 is a flowchart illustrating an example of the workpiece processing method according to the third embodiment.

### Description of Embodiments

A processing system 100, a machine tool system 1, and a workpiece processing method according to some embodiments will hereafter be described with reference to the drawings. In the following description of the embodiments, identical reference numerals are given to portions and members having identical functions, and descriptions of the portions and members with the identical reference numerals that are deemed redundant will be omitted.

### (Definition of Terms)

As used herein, the weight of a workpiece E is defined as a first weight w1, the volume of the workpiece E is defined as a first volume v1, and the density of the material constituting the workpiece E (in other words, the weight of the material constituting the workpiece E per unit volume) is defined as a first density d1.

As used herein, a product P encompasses all objects to be formed through processing by a machine tool 6. The product P is not limited to a final product. The product P may be a work-in-progress.

As used herein, the weight of the product P is defined as a second weight w2, the volume of the product P is defined as a second volume v2, and the density of the material constituting the product P (in other words, the weight of the material constituting the product P per unit volume) is defined as a second density d2. The second density d2 is generally the same as the first density d1. However, for example, when processing performed by the machine tool 6 includes adding new material to the workpiece E, the second density d2 may be different from the first density d1.

### (First Embodiment)

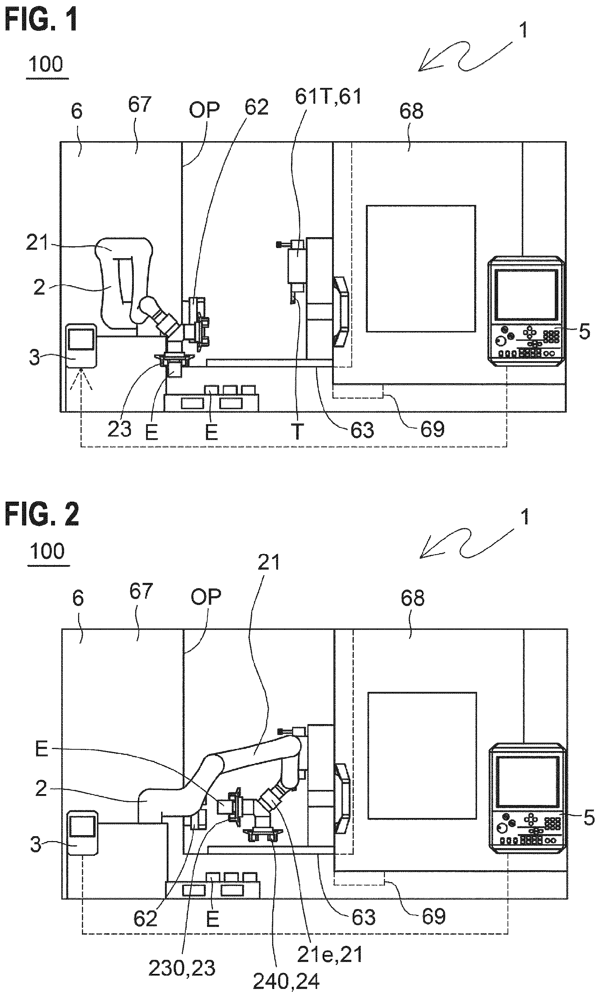

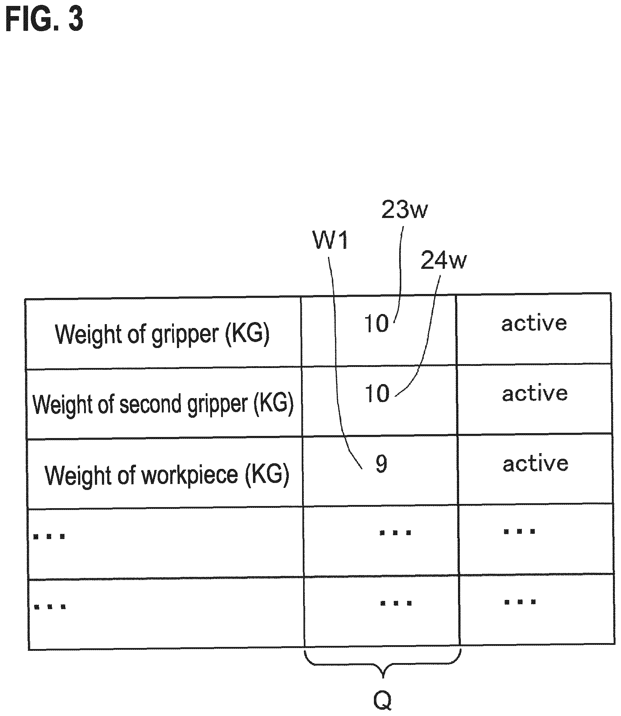

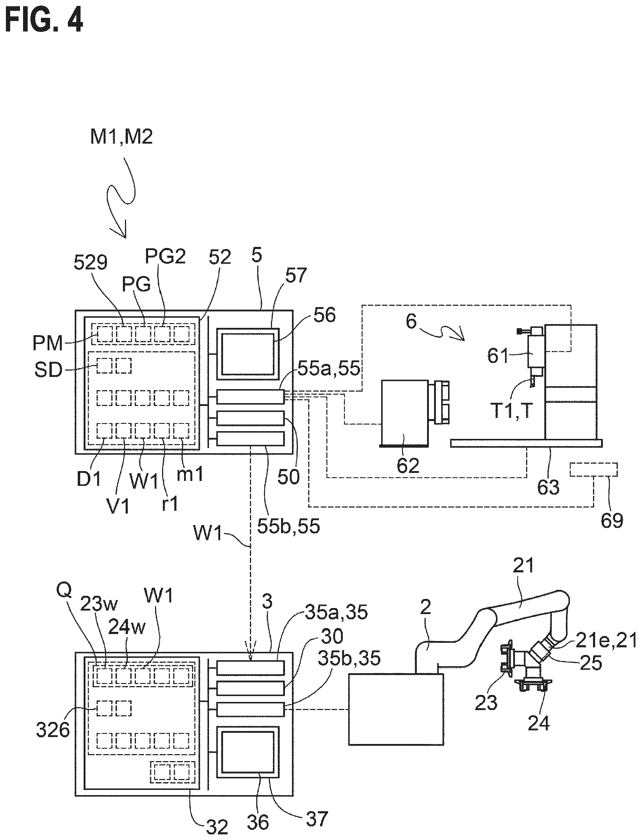

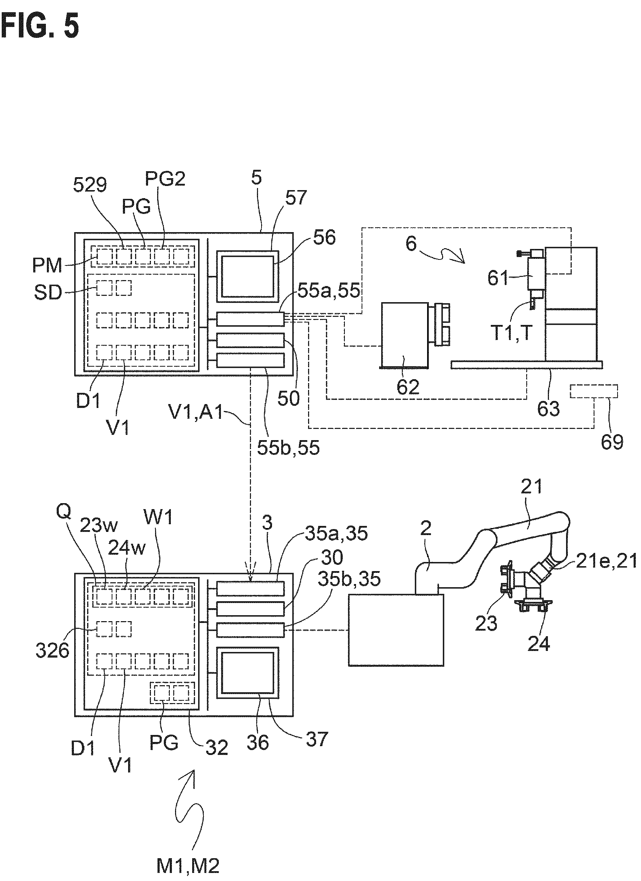

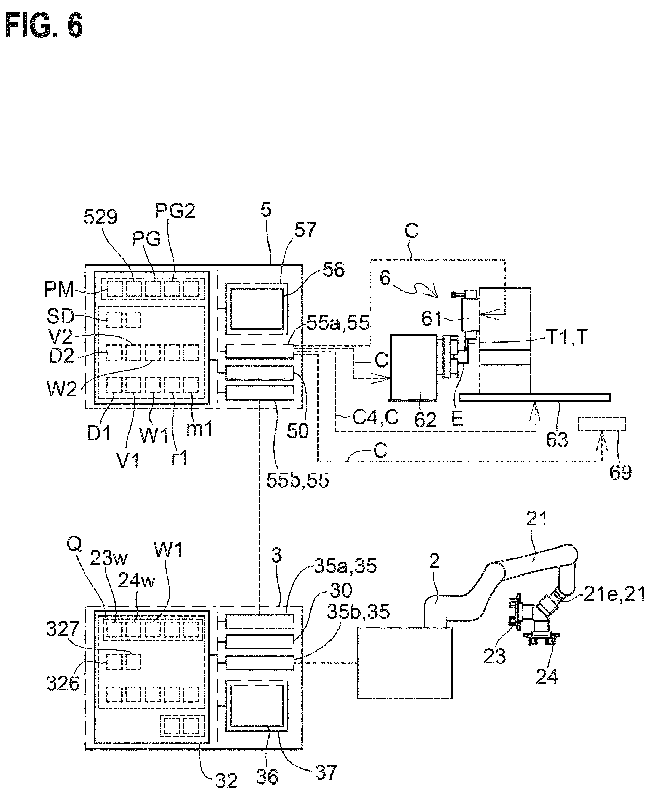

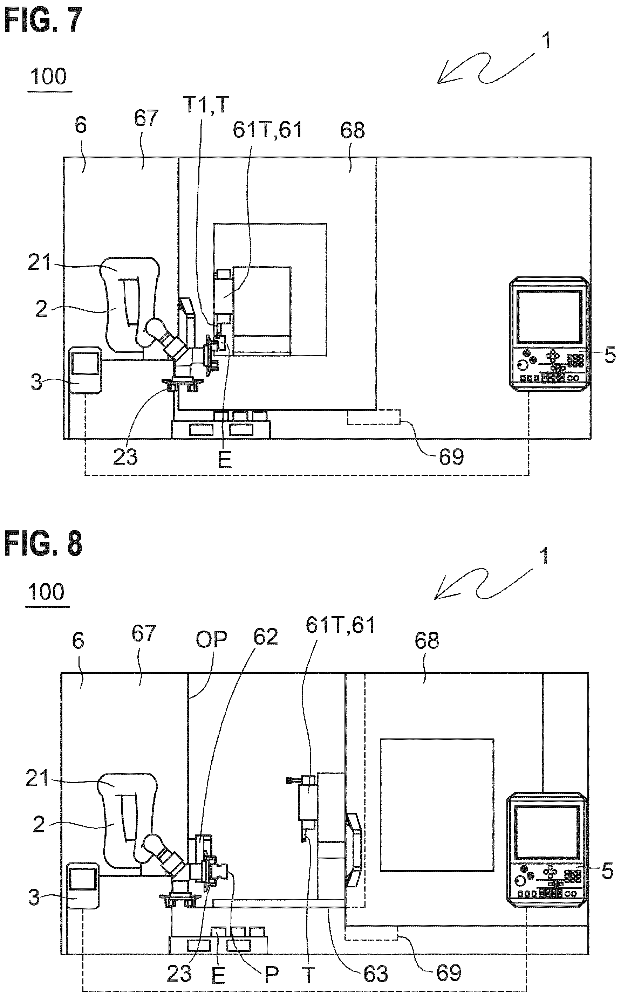

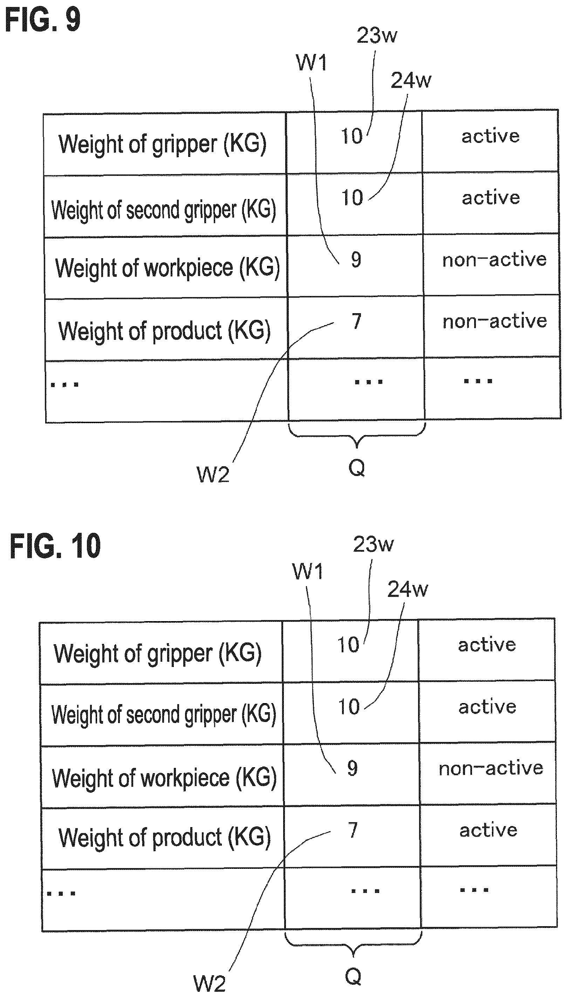

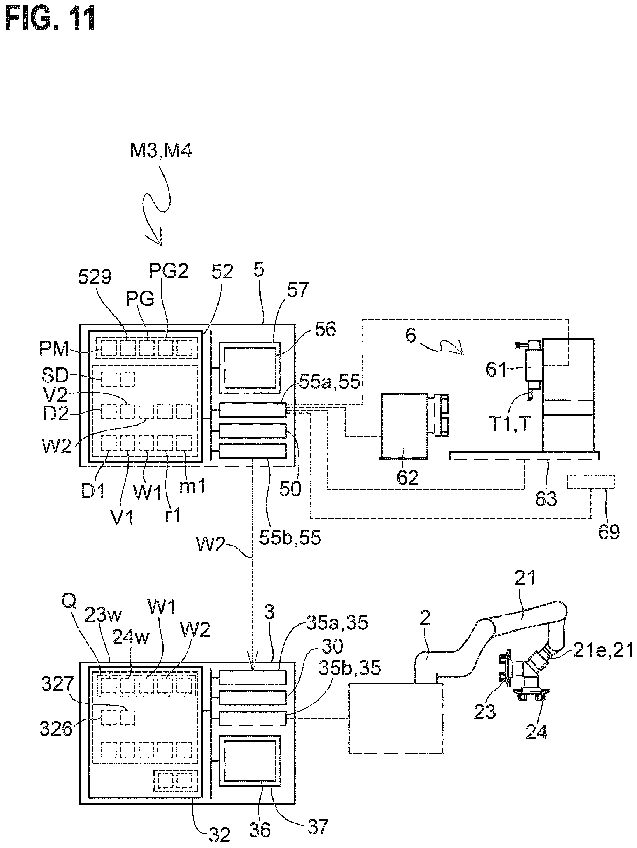

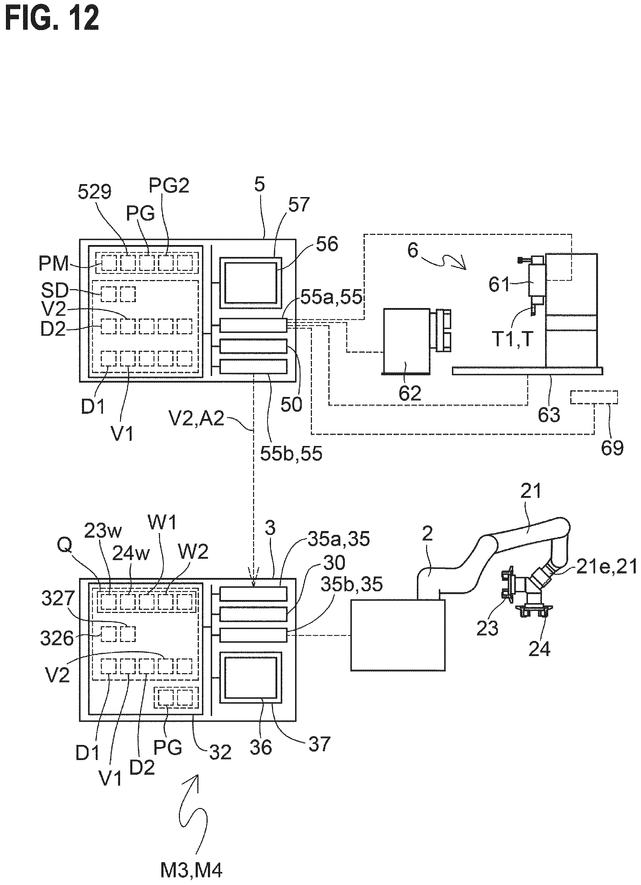

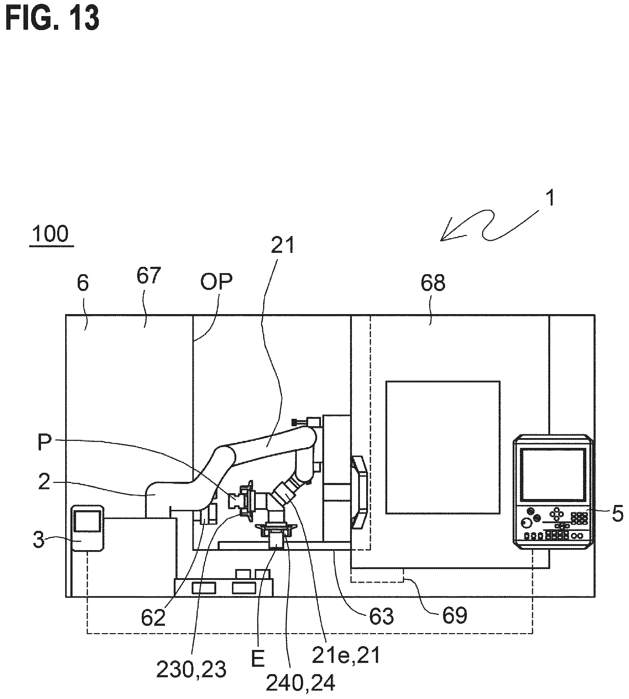

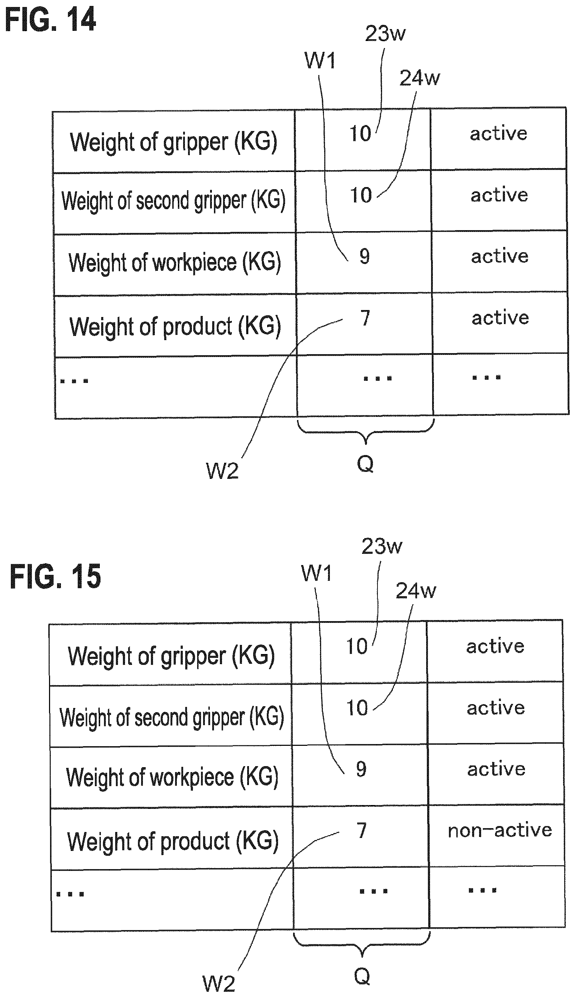

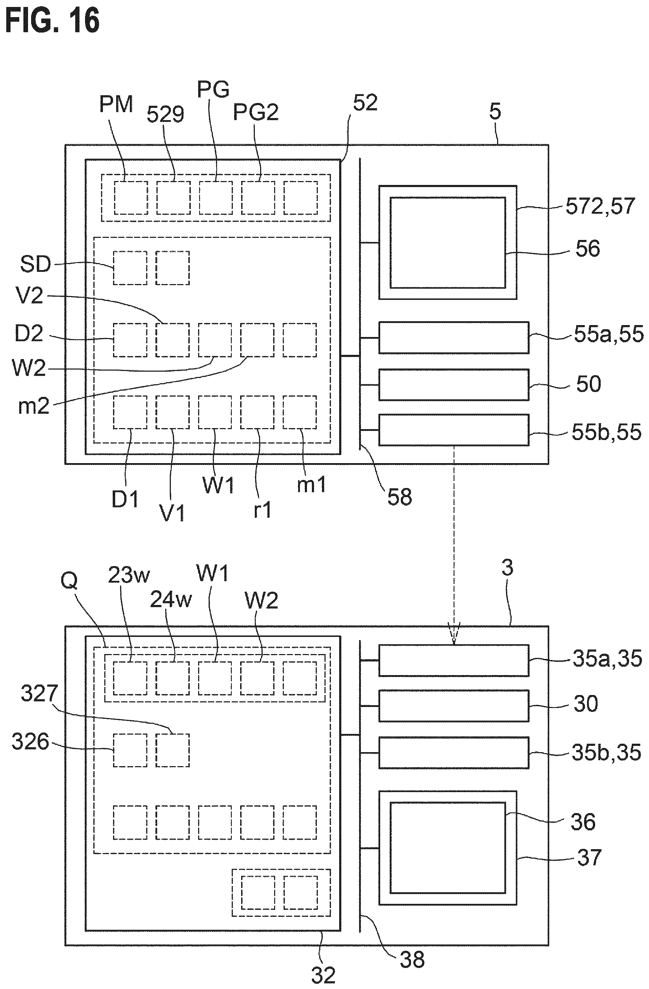

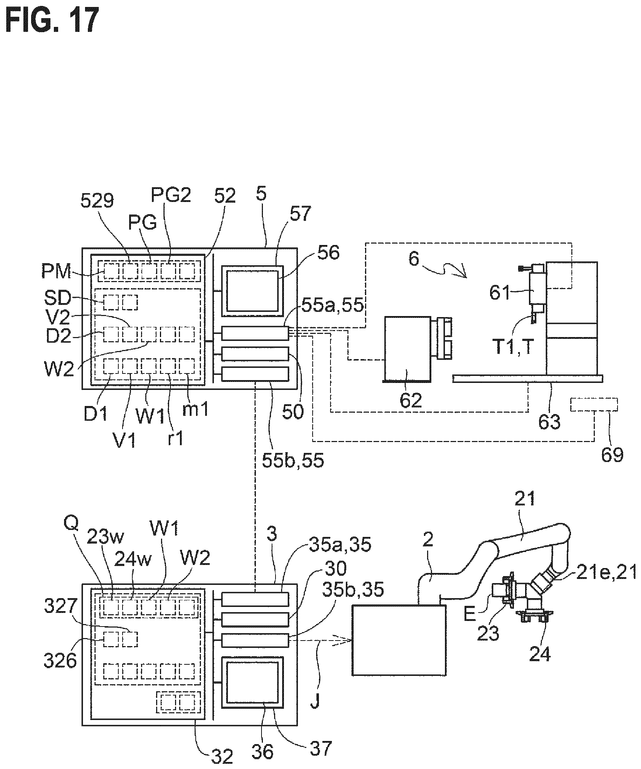

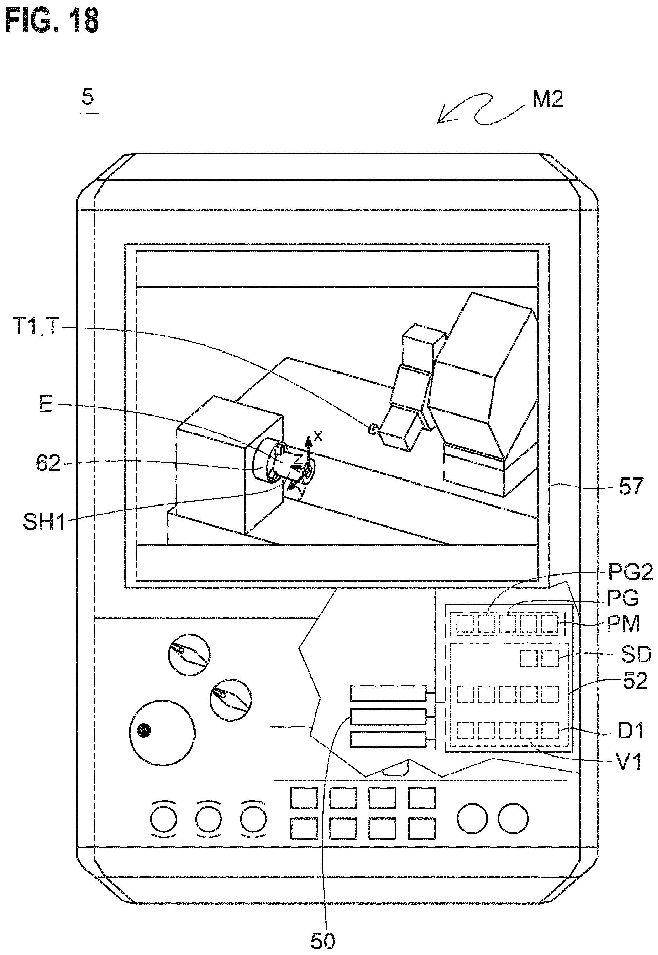

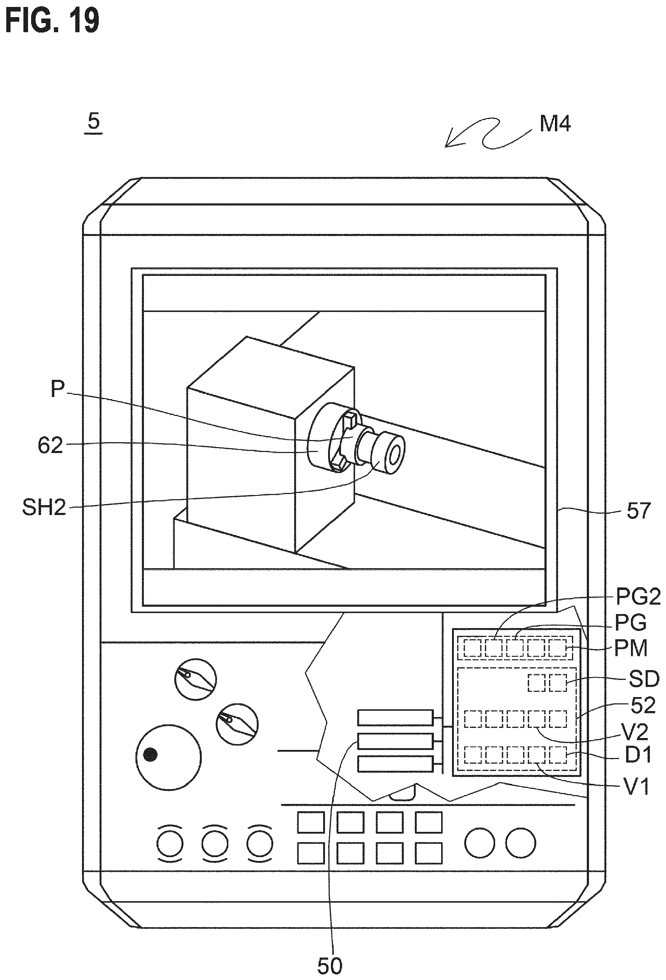

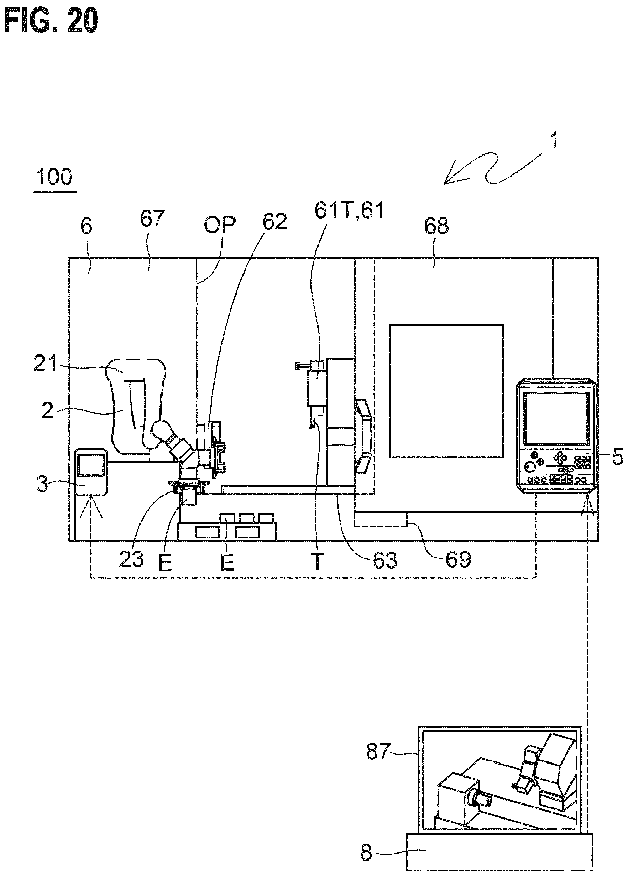

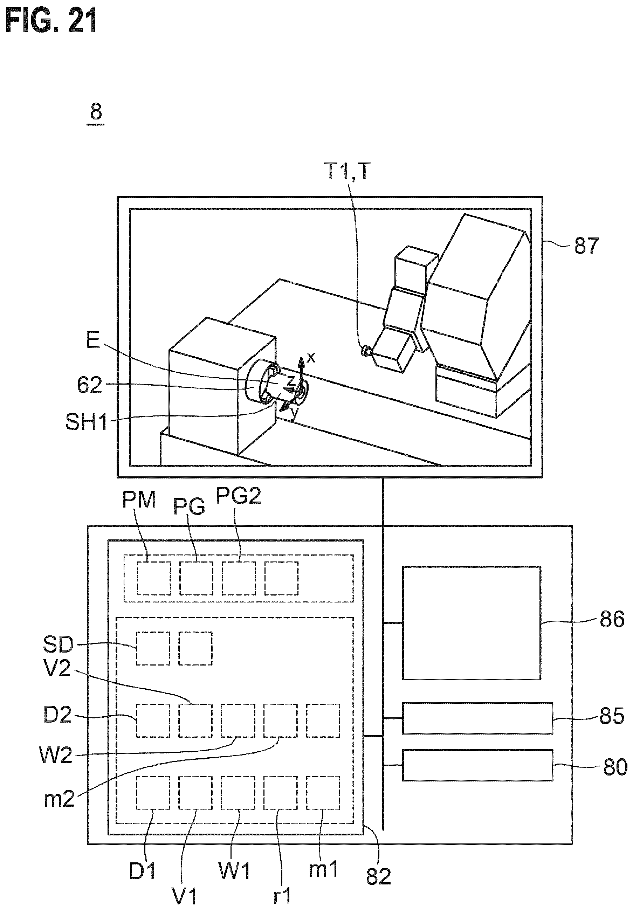

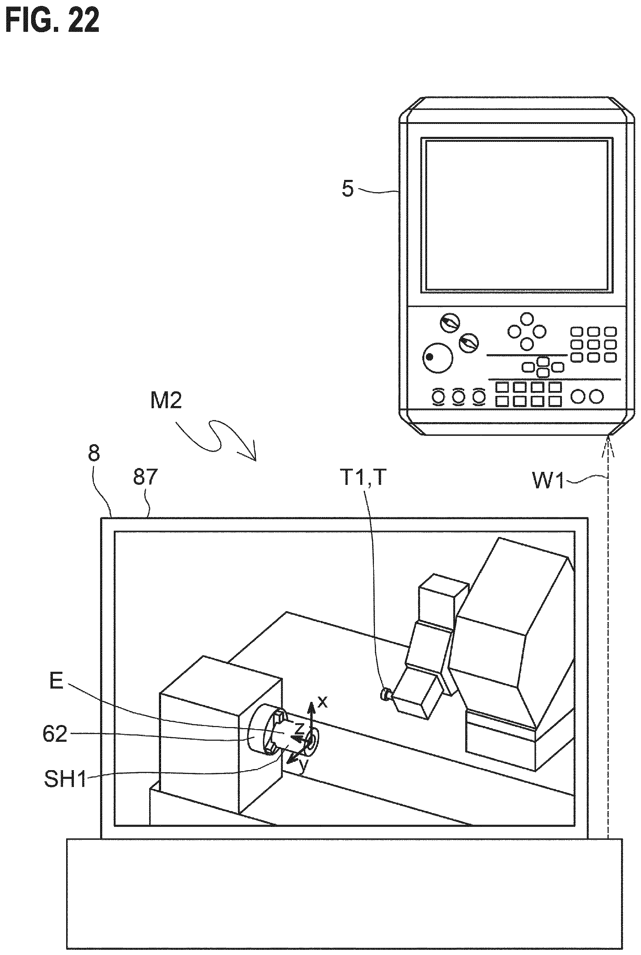

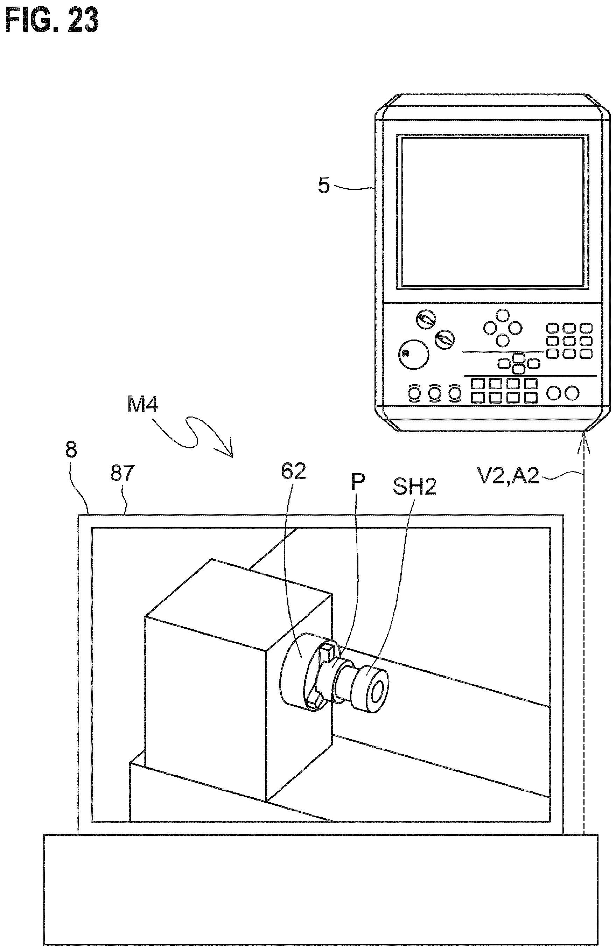

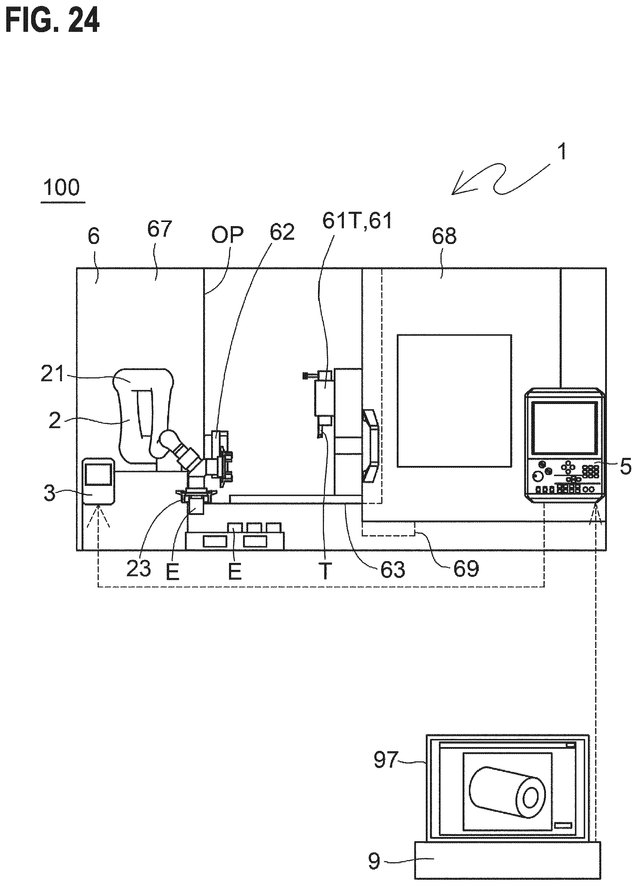

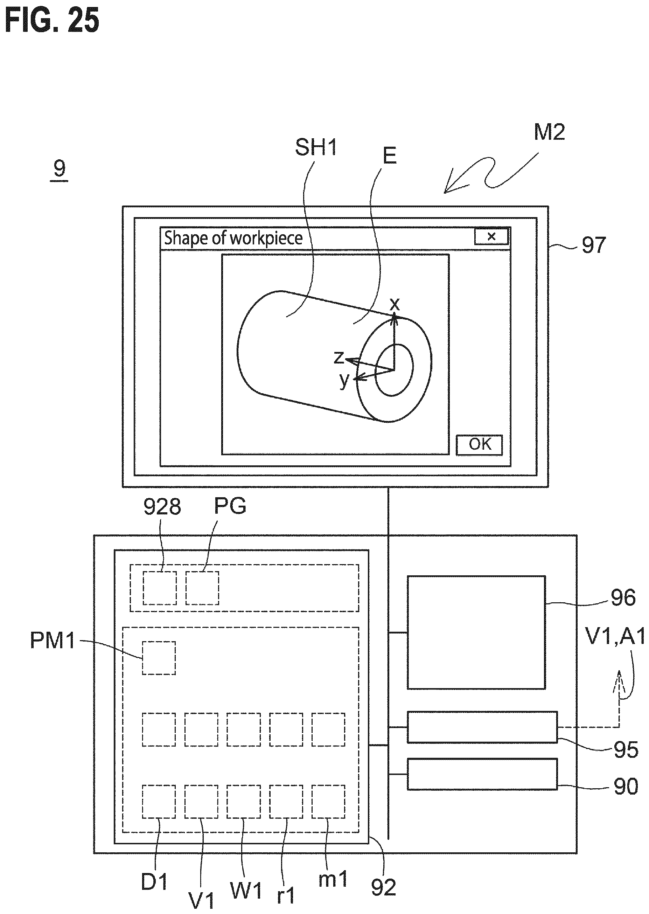

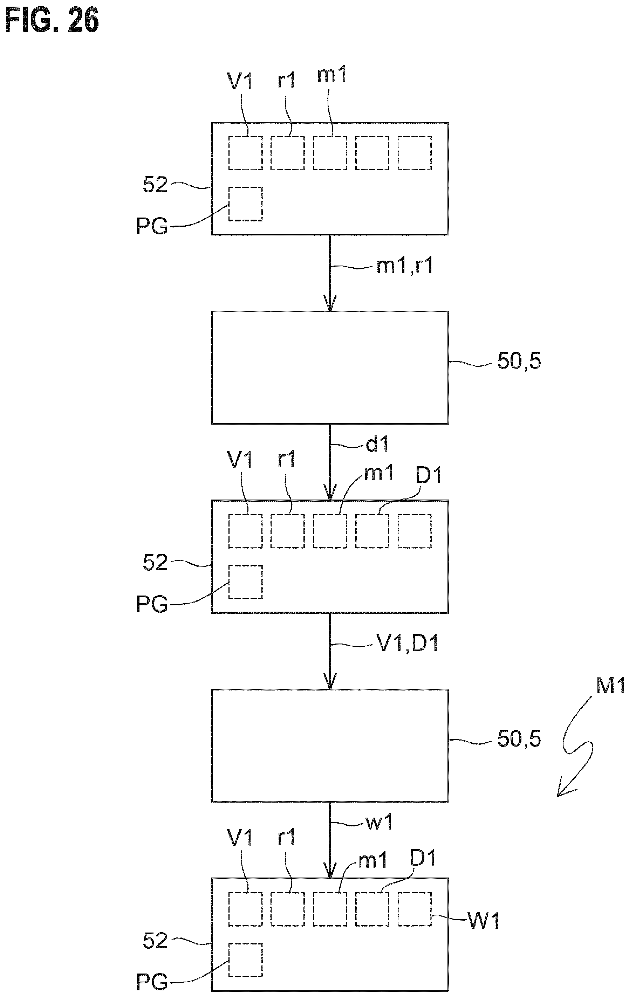

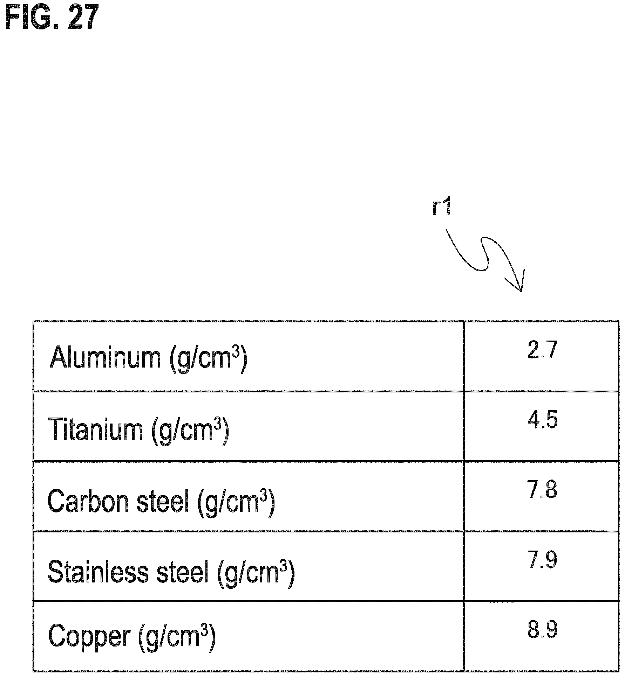

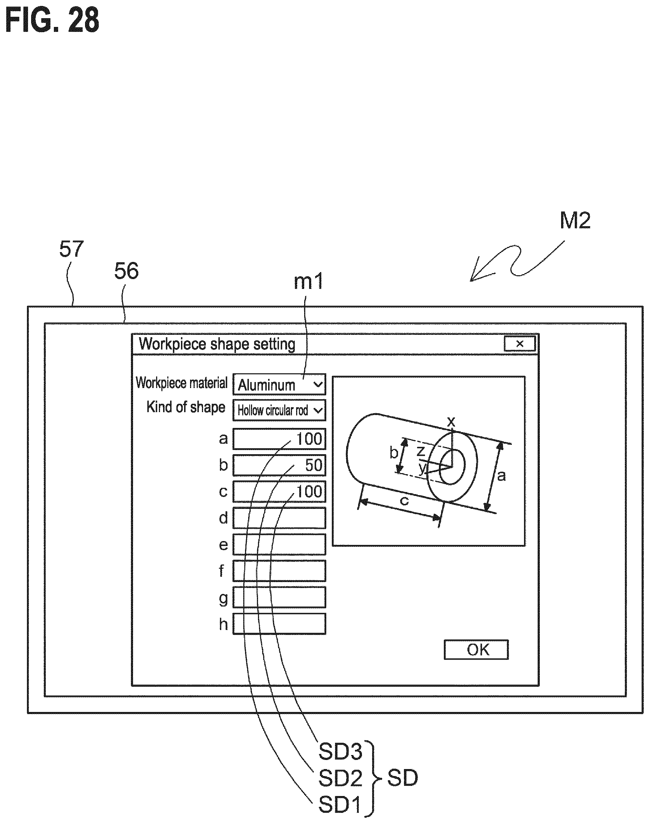

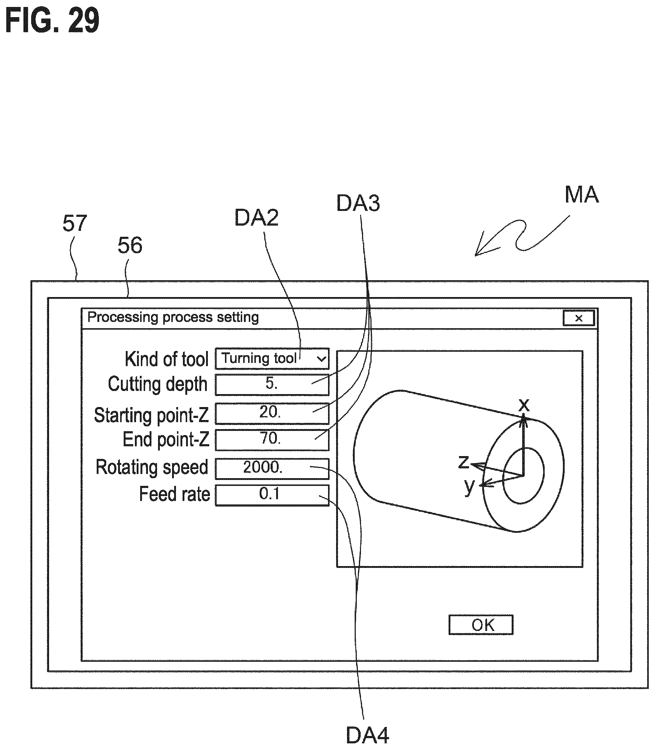

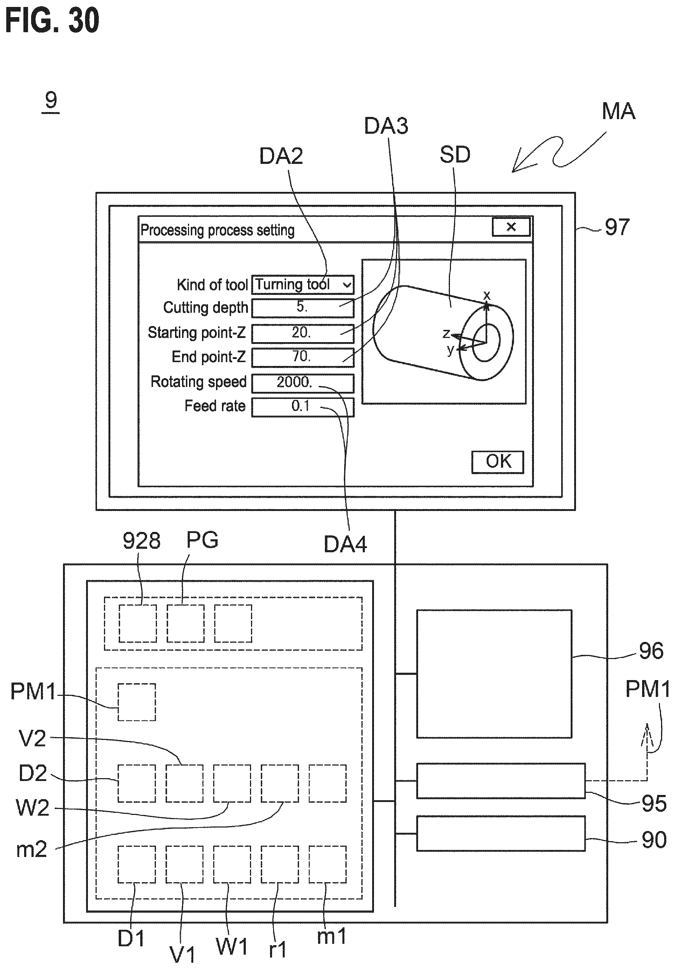

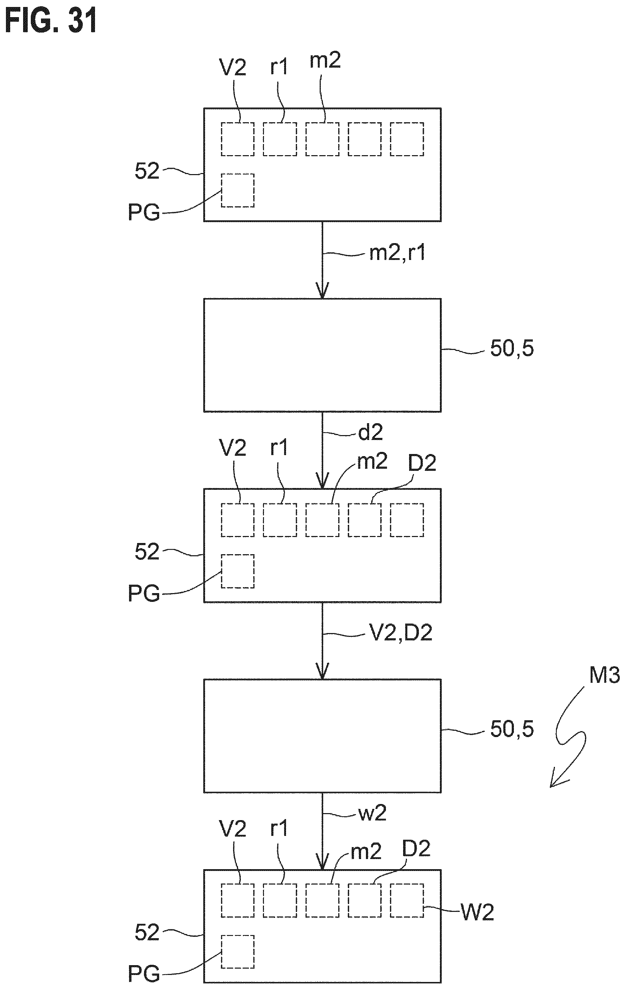

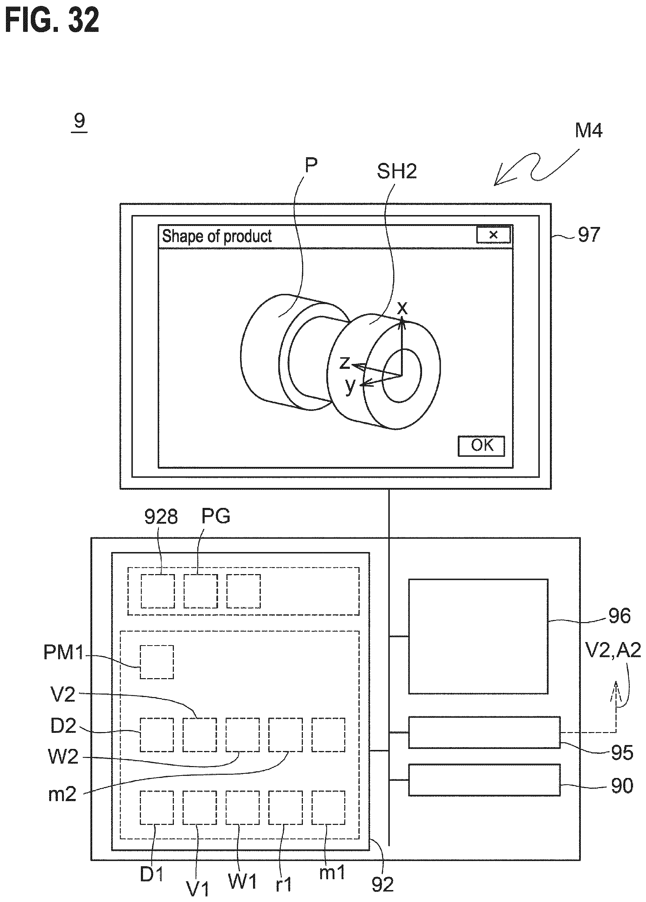

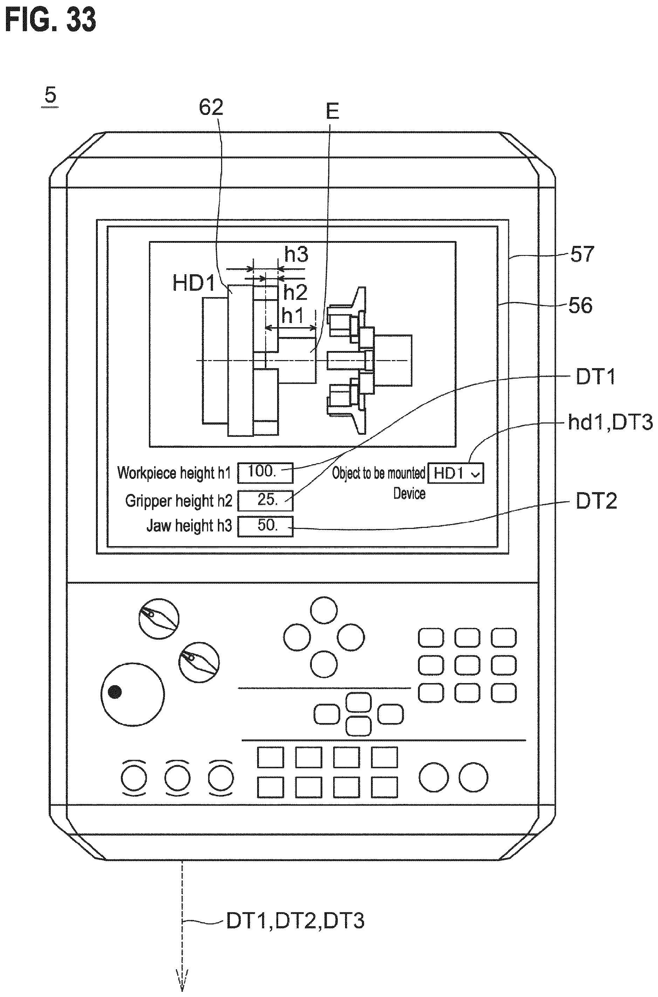

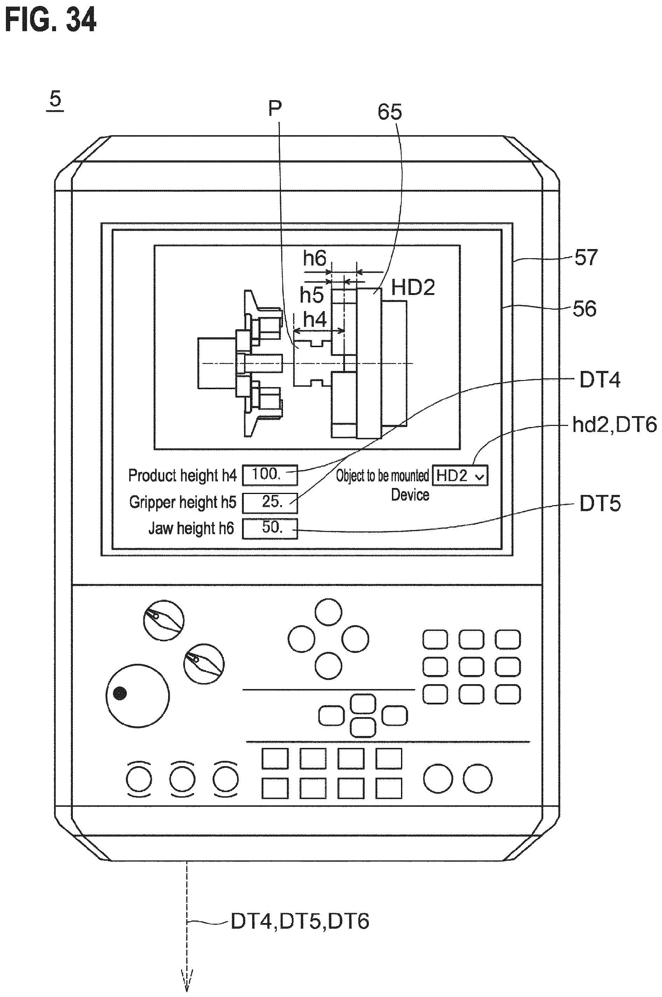

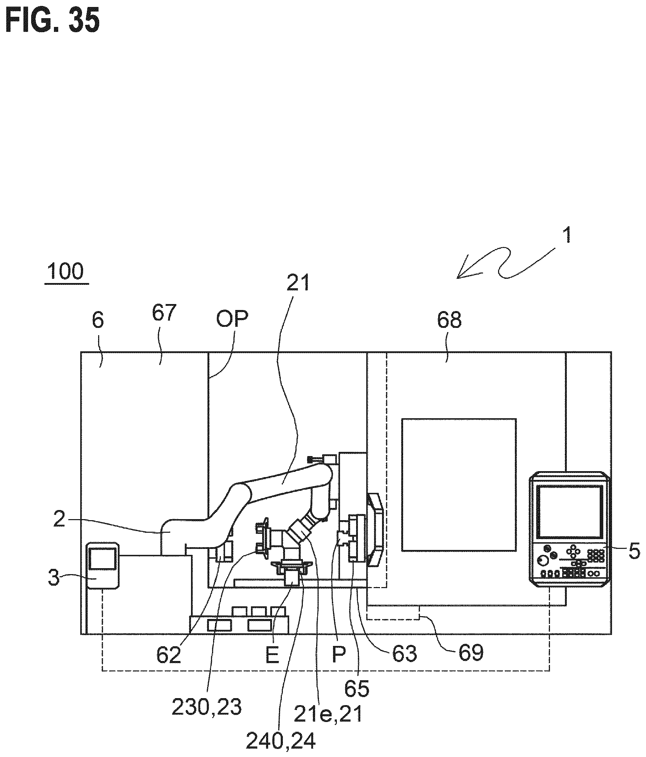

The processing system 100 according to a first embodiment will be described with reference to FIGs. 1 to 35. FIGs. 1 and 2 are diagrams schematically illustrating the processing system 100 according to the first embodiment. FIG. 3 is a table illustrating an example of control parameters Q. FIG. 4 is a diagram schematically illustrating a state in which workpiece weight data W1 is transmitted from a numerical controller 5 to a robot controller 3. FIG. 5 is a diagram schematically illustrating a state in which first basic data A1 for calculating the weight of a workpiece is transmitted from the numerical controller 5 to the robot controller 3. FIG. 6 is a diagram schematically illustrating a state in which the numerical controller 5 is capable of controlling control target devices. FIGs. 7 and 8 are diagrams schematically illustrating the processing system 100 according to the first embodiment. FIGs. 9 and 10 are tables illustrating an example of the control parameters Q. FIG. 11 is a diagram schematically illustrating a state in which product weight data W2 is transmitted from the numerical controller 5 to the robot controller 3. FIG. 12 is a diagram schematically illustrating a state in which second basic data A2 for calculating the weight of a product is transmitted from the numerical controller 5 to the robot controller 3. FIG. 13 is a diagram schematically illustrating the processing system 100 according to the first embodiment. FIGs. 14 and 15 are tables illustrating an example of the control parameters Q. FIG. 16 is a diagram schematically illustrating a state in which the numerical controller 5 is communicable with the robot controller 3. FIG. 17 is a diagram schematically illustrating a state in which the robot controller 3 is capable of controlling a robot 2. FIGs. 18 and 19 are diagrams schematically illustrating an example of the numerical controller 5. FIG. 20 is a diagram schematically illustrating a state in which the numerical controller 5 is capable of receiving data from a simulator 8. FIG. 21 is a diagram schematically illustrating an example of the simulator 8. FIGs. 22 and 23 are diagrams schematically illustrating a state in which the numerical controller 5 is capable of receiving data from the simulator 8. FIG. 24 is a diagram schematically illustrating a state in which the numerical controller 5 is capable of receiving data from a CAD/CAM system 9. FIG. 25 is a diagram schematically illustrating an example of the CAD/CAM system 9. FIG. 26 is a diagram schematically illustrating an example of a procedure in which the workpiece weight data W1 is derived by the numerical controller 5. FIG. 27 is a table schematically illustrating associated data r1 that associates a plurality of materials and densities of the plurality of materials. FIG. 28 is a diagram schematically illustrating a state in which shape data SD of a workpiece is inputted. FIG. 29 is a diagram schematically illustrating a state in which data for generating a processing program is inputted. FIG. 30 is a diagram schematically illustrating a state in which data for generating the processing program is inputted. FIG. 31 is a diagram schematically illustrating an example of a procedure in which the product weight data W2 is derived by the numerical controller 5. FIG. 32 is a diagram schematically illustrating an example of the CAD/CAM system 9. FIGs. 33 and 34 are diagrams schematically illustrating an example of the numerical controller 5. FIG. 35 is a diagram schematically illustrating a state in which the machine tool 6 includes a work holder 62 and a second work holder 65.

As illustrated in FIG. 1, the processing system 100 according to the first embodiment includes the robot 2, the robot controller 3, the numerical controller 5, and the machine tool 6.

In the example illustrated in FIG. 1, the machine tool 6 includes a processing head 61 (for example, a turret 61T), a work holder 62, and a mover 63. The processing head 61 holds a tool T. The work holder 62 supports a workpiece. The mover 63 moves the processing head 61 relative to the work holder 62. The machine tool 6 may include a wall 67, a door 68, and a door mover 69. The wall 67 includes an opening OP through which the workpiece E and/or the product is allowed to pass. The door 68 opens and closes the opening OP. The door mover 69 moves the door 68.

As illustrated in FIG. 2, the robot 2 loads the workpiece E onto the machine tool 6. More specifically, the robot 2 loads the workpiece E onto the machine tool 6 through the opening OP. The robot 2 may be capable of passing the workpiece E to the work holder 62.

In the example illustrated in FIG. 2, the robot 2 includes a plurality of arms 21 and a gripper 23 (for example, a robot hand 230). The arms 21 each include a distal end arm 21e. The gripper 23 grips the workpiece E. In the example illustrated in FIG. 2, the gripper 23 is mounted on the distal end arm 21e.

In the example illustrated in FIG. 2, the robot 2 includes a second gripper 24 (for example, a second robot hand 240). The second gripper 24 is mounted on the distal end arm 21e. The robot 2 may include one gripper, two grippers, or three or more grippers. In other words, the second gripper 24 may be omitted from the robot 2, or the robot 2 may include other grippers in addition to the gripper 23 and the second gripper 24.

The robot controller 3 sets the workpiece weight data W1 that indicates the weight of the workpiece E (in other words, the first weight w1), as one of the control parameters Q of the robot 2. The control parameters Q include, for example, the workpiece weight data W1 and pieces of weight data of structures to be mounted on the distal end arm 21e. In the example illustrated in FIG. 3, the robot controller 3 sets the workpiece weight data W1 as one of the control parameters Q of the robot 2, sets weight data 23w of the gripper 23 (for example, the weight data of the robot hand 230) as another one of the control parameters Q of the robot 2, and sets weight data 24w of the second gripper 24 (for example, the weight data of the second robot hand 240) as yet another one of the control parameters Q of the robot 2. The number of pieces of data included in the control parameters Q changes in accordance with, for example, the number of structures to be mounted on the distal end arm 21e.

When the gripper 23 grips the workpiece E (more specifically, at any point in time within a period from immediately before the gripper 23 starts a gripping operation of the workpiece E to immediately after the gripper 23 completes the gripping operation of the workpiece E), the robot controller 3 switches the state of the workpiece weight data W1, which is one of the control parameters Q, from a non-active state to an active state. In this manner, the workpiece weight data W1 is reflected in the control parameters Q. The robot controller 3 controls a loading operation of the robot 2, based on the control parameters Q (more specifically, the control parameters Q in which the workpiece weight data W1 is activated) and loading path data 326 that specifies a loading path of the workpiece E. In the example illustrated in FIGs. 4 and 5, the control parameters Q and the loading path data 326 are both stored in a memory of the robot controller 3.

In the example illustrated in FIG. 4, the numerical controller 5 transmits the workpiece weight data W1, which indicates the first weight w1, to the robot controller 3. Additionally, the robot controller 3 sets the workpiece weight data W1 to be acquired from the numerical controller 5 as one of the control parameters Q of the robot 2.

Alternatively, as illustrated in FIG. 5, the numerical controller 5 may transmit the first basic data A1 for calculating the weight of the workpiece E (in other words, the first weight w1) to the robot controller 3. The first basic data A1 includes, for example, workpiece volume data V1. The workpiece volume data V1 indicates the volume of the workpiece E. The first basic data A1 may include the workpiece volume data V1 and workpiece density data D1. The workpiece density data D1 indicates the density of the material constituting the workpiece E.

In the example illustrated in FIG. 5, the robot controller 3 derives the workpiece weight data W1, based on at least the first basic data A1, and sets the derived workpiece weight data W1 as one of the control parameters Q. More specifically, the robot controller 3 derives the workpiece weight data W1, based on the workpiece volume data V1 and the workpiece density data D1. Additionally, the robot controller 3 sets the derived workpiece weight data W1 as one of the control parameters Q.

In the example illustrated in FIG. 6, the numerical controller 5 generates operation commands C by executing a processing program PM associated with the workpiece E. The machine tool 6 processes the workpiece E into a product, based on the operation commands C.

As used herein, the numerical controller 5 executing the processing program PM encompasses the numerical controller 5 executing the processing program PM via a processing calculation program 529. In other words, the processing program PM may be processed (in other words, interpreted) by the numerical controller 5 by executing the processing calculation program 529. The numerical controller 5 generates the operation commands C to be transmitted to the plurality of control target devices of the machine tool 6, based on the processing (in other words, based on the interpretation).

In the processing system 100 according to the first embodiment, the workpiece weight data W1 is reflected in the control parameters Q of the robot 2. This makes it possible for the robot controller 3 to more accurately execute position control of the workpiece E. For example, it is possible for the robot controller 3 to control the operation of the arm 21 taking into consideration, for example, distortion of the arm 21 caused due to the weight of the workpiece E. Additionally, with the control parameters Q being more appropriately set, erroneous detection is less likely to occur regarding detection of a collision between the robot 2 loading the workpiece E and other object.

Furthermore, in the processing system 100 according to the first embodiment, the workpiece weight data W1 or the first basic data A1 for calculating the weight of the workpiece E is transmitted from the numerical controller 5 to the robot controller 3. This eliminates the need for an operator to manually input the weight of the workpiece E in the robot controller 3. For example, the operator does not need to manually input, every time the kind of the workpiece E is changed, the weight of the workpiece E after the change, in the robot controller 3. This reduces the workload of the operator.

### (Optional Configurations)

Next, optional configurations adoptable by the processing system 100 according to the first embodiment will be described with reference to FIGs. 1 to 35.

### (Unloading of Product P)

In the example illustrated in FIG. 8, the robot 2 is capable of unloading the product P from the machine tool 6. More specifically, the robot 2 receives the product P from the work holder 62. Additionally, the robot 2 unloads the product P from the machine tool 6 through the opening OP.

In the example illustrated in FIG. 9, the robot controller 3 sets the product weight data W2 as one of the control parameters Q of the robot 2. The product weight data W2 indicates the weight of the product P (in other words, the second weight w2). The control parameters Q include, for example, the product weight data W2 and pieces of weight data of the structures to be mounted on the distal end arm 21e. In the example illustrated in FIG. 9, the robot controller 3 sets the product weight data W2 as one of the control parameters Q of the robot 2, sets the weight data 23w of the gripper 23 (for example, the weight data of the robot hand 230) as another one of the control parameters Q of the robot 21, and sets the weight data 24w of the second gripper 24 (for example, the weight data of the second robot hand 240) as yet another one of the control parameters Q of the robot 2. The number of pieces of data included in the control parameters Q changes in accordance with, for example, the number of structures to be mounted on the distal end arm 21e.

When the gripper 23 grips the product P (more specifically, at any point in time within a period from immediately before when the gripper 23 starts a gripping operation of the product P to immediately after the gripper 23 completes the gripping operation of the product P), the robot controller 3 switches the state of the product weight data W2, which is one of the control parameters Q, from the non-active state (refer to FIG. 9) to the active state (refer to FIG. 10). In this manner, the product weight data W2 is reflected in the control parameters Q. Note that, as used herein, the data being in the active state means that the data is reflected in the control parameters Q. Additionally, as used herein, the data being in the non-active state means that the data is not reflected in the control parameters Q.

The robot controller 3 controls an unloading operation of the robot 2, based on the control parameters Q including the product weight data W2 (more specifically, the control parameters Q in which the product weight data W2 is activated) and unloading path data 327 that specifies an unloading path of the product P. In the example illustrated in FIG. 11, the control parameters Q and the unloading path data 327 are both stored in the memory of the robot controller 3.

As illustrated in FIG. 13, the robot 2 may be capable of executing loading of the workpiece E onto the machine tool 6 and unloading of the product P from the machine tool 6 in parallel. In the example illustrated in FIG. 13, it is possible for the gripper 23 to grip the product P while the second gripper 24 grips the workpiece E.

In this case, as illustrated in FIG. 14, the robot controller 3 sets each of the workpiece weight data W1 and the product weight data W2 as one of the control parameters Q. When the robot 2 supports both the workpiece E and the product P, the robot controller 3 controls the operation of the robot 2, based on the control parameters Q that reflect both the workpiece weight data W1 and the product weight data W2 (in other words, the control parameters Q in which the workpiece weight data W1 and the product weight data W2 are both activated), and the loading path data 326 or the unloading path data 327.

For example, the robot controller 3 activates the workpiece weight data W1 when the robot 2 receives the workpiece E. Additionally, the robot controller 3 controls the loading operation of the robot 2, based on the control parameters Q (refer to FIG. 15) in which the workpiece weight data W1 is activated and the product weight data W2 is deactivated, and on the loading path data 326. Thereafter, the robot controller 3 activates the product weight data W2 when the robot 2 that supports the workpiece E receives the product P. Additionally, the robot controller 3 controls the operation of the robot 2, based on the control parameters Q (refer to FIG. 14) in which the workpiece weight data W1 and the product weight data W2 are both activated, and on the loading path data 326 or the unloading path data 327. Thereafter, the robot controller 3 deactivates the workpiece weight data W1 when the robot 2 passes the workpiece E to the work holder 62. Additionally, the robot controller 3 controls the loading operation of the robot 2, based on the control parameters Q (refer to FIG. 10) in which the workpiece weight data W1 is deactivated and the product weight data W2 is activated, and on the unloading path data 327.

In the example illustrated in FIG. 11, the numerical controller 5 transmits the product weight data W2, which indicates the second weight w2, to the robot controller 3. Additionally, the robot controller 3 sets the product weight data W2 to be acquired from the numerical controller 5 as one of the control parameters Q of the robot 2.

Alternatively, as illustrated in FIG. 12, the numerical controller 5 may transmit the second basic data A2 for calculating the weight of the product P (in other words, the second weight w2) to the robot controller 3. The second basic data A2 includes, for example, product volume data V2. The product volume data V2 indicates the volume of the product P. The second basic data A2 may include the product volume data V2 and product density data D2. The product density data D2 indicates the density of the material constituting the product P. Note that, the product density data D2 is generally the same as the workpiece density data D1.

In the example illustrated in FIG. 12, the robot controller 3 derives the product weight data W2, based on at least the second basic data A2, and sets the derived product weight data W2 as one of the control parameters Q. More specifically, the robot controller 3 derives the product weight data W2, based on the product volume data V2 and the product density data D2. Additionally, the robot controller 3 sets the derived product weight data W2 as one of the control parameters Q.

In the example illustrated in FIGs. 11 and 12, the product weight data W2 is reflected in the control parameters Q of the robot 2. This makes it possible for the robot controller 3 to more accurately execute position control of the product P. For example, it is possible for the robot controller 3 to control the operation of the arm 21 taking into consideration, for example, distortion of the arm 21 caused due to the weight of the product P. Additionally, with the control parameters Q being more appropriately set, erroneous detection is less likely to occur regarding detection of a collision between the robot 2 unloading the product P and other object.

Furthermore, in the example illustrated in FIGs. 11 and 12, the product weight data W2 or the second basic data A2 for calculating the weight of the product P is transmitted from the numerical controller 5 to the robot controller 3. This eliminates the need for the operator to manually input the weight of the product P in the robot controller 3. For example, the operator does not need to manually input, every time the kind of the product P is changed, the weight of the product P after the change in the robot controller 3. This reduces the workload of the operator.

### (Numerical Controller 5)

One computer may function as the numerical controller 5, or a plurality of computers may operate together to function as the numerical controller 5. As illustrated in FIG. 16, the numerical controller 5 includes a hardware processor 50 (hereinafter, simply referred to as a "processor 50"), a memory 52, a communication circuit 55, an inputter 56, and a display 57. In the example illustrated in FIG. 16, the processor 50, the memory 52, the communication circuit 55, the inputter 56, and the display 57 are coupled to each other via a bus 58. In the example illustrated in FIG. 16, the display 57 includes a display 572 with a touch panel that also functions as the inputter 56.

The memory 52 includes a storage medium that is readable by the processor 50 of the numerical controller 5. The memory 52 may include, for example, a non-volatile or volatile semiconductor memory such as a RAM, a ROM, and a flash memory. The memory 52 may include a magnetic disk or other forms of memories. The memory 52 stores data and programs. The memory 52 may be distributed to a plurality of locations.

As illustrated in FIG. 6, the communication circuit 55 transmits the operation commands C to the control target devices of the machine tool 6 (for example, the processing head 61, the work holder 62, the mover 63, and the door mover 69). Further, as illustrated in FIGs. 4 and 5, the communication circuit 55 transmits data such as the workpiece weight data W1 or the first basic data A1 for calculating the weight of the workpiece E to the robot controller 3. In the example illustrated in FIGs. 4 and 5, a communication circuit 55a that transmits the operation commands to the control target devices of the machine tool 6 is a separate circuit from a communication circuit 55b that transmits data to the robot controller 3. Alternatively, the communication circuit 55a, which transmits the operation commands to the control target devices of the machine tool 6 may be the same circuit as the communication circuit 55b, which transmits data to the robot controller 3. Further, data may be transmitted and received between the robot controller 3 and the numerical controller 5 via a bus.

The inputter 56 is not limited to the display 572 with a touch panel. For example, the numerical controller 5 may include an inputter and a display. Examples of the inputter includes a button, a switch, a lever, a pointing device, and a keyboard. The display displays data inputted to the inputter or other information.

### (Robot Controller 3)

One computer may function as the robot controller 3, or a plurality of computers may operate together to function as the robot controller 3. As illustrated in FIG. 16, the robot controller 3 includes a processor (hereinafter, referred to as a "second processor 30" to distinguish from the processor 50 of the numerical controller 5), a memory (hereinafter, referred to as a "second memory 32" to distinguish from the memory 52 of the numerical controller 5), a communication circuit (hereinafter, referred to as a "second communication circuit 35" to distinguish from the communication circuit 55 of the numerical controller 5), an inputter (hereinafter, referred to as a "second inputter 36" to distinguish from the inputter 56 of the numerical controller 5), and a display (hereinafter, referred to as a "second display 37" to distinguish from the display 57 of the numerical controller 5). In the example illustrated in FIG. 16, the second processor 30, the second memory 32, the second communication circuit 35, the second inputter 36, and the second display 37 may be coupled to each other via a bus (hereinafter, referred to as a "second bus 38" to distinguish from the bus 58 of the numerical controller 5).

The second memory 32 includes a storage medium that is readable by the second processor 30. The second memory 32 may include, for example, a non-volatile or volatile semiconductor memory such as a RAM, a ROM, and a flash memory. The memory 32 may include a magnetic disk or other forms of memories. The second memory 32 stores data and programs. The second memory 32 may be distributed to a plurality of locations.

As illustrated in FIG. 17, the second communication circuit 35 transmits a transport operation command J to the robot 2. Further, as illustrated in FIGs. 4 and 5, the second communication circuit 35 receives data such as the workpiece weight data W1 or the first basic data A1 for calculating the weight of the workpiece E from the numerical controller 5. In the example illustrated in FIGs. 4 and 5, the second communication circuit 35a, which receives data from the numerical controller 5, is a separate circuit from the second communication circuit 35b, which transmits the transport operation command to the robot 2. Alternatively, the second communication circuit 35a, which receives data from the numerical controller 5, may be the same circuit as the second communication circuit 35b, which transmits the transport operation command to the robot 2.

Examples of the second inputter 36 includes a display with a touch panel, a button, a switch, a lever, a pointing device, and a keyboard.

### (Processing Simulation)

As illustrated in FIG. 18, the numerical controller 5 may be capable of executing a processing simulation that virtually processes the workpiece E. The workpiece E is virtually processed by the numerical controller 5 executing the processing simulation.

In the example illustrated in FIG. 18, the numerical controller 5 executes the processing simulation by virtually executing the processing program PM stored in the memory 52. Note that, as used herein, the numerical controller 5 virtually executing the processing program PM encompasses the numerical controller 5 executing the processing program PM via a second calculation program PG2. In other words, the processing program PM may be processed (in other words, interpreted) by the numerical controller 5 by executing the second calculation program PG2. The numerical controller 5 virtually operates the plurality of control target devices of the machine tool 6 on the display 57, based on the processing (in other words, based on the interpretation).

In the example illustrated in FIG. 18, the numerical controller 5 generates three-dimensional shape data SH1 of the workpiece E by virtually executing the processing program PM. Further, the numerical controller 5 moves the tool T (for example, a cutting tool T1) relative to the workpiece E on the display 57 by virtually executing the processing program PM. In the example illustrated in FIG. 19, the numerical controller 5 generates three-dimensional shape data SH2 of the product P by virtually executing the processing program PM.

Alternatively, as illustrated in FIG. 20, the numerical controller 5 according to the first embodiment may be configured to be communicable with the simulator 8 provided separately from the numerical controller 5.

In the example illustrated in FIG. 21, the simulator 8 includes a third processor 80, a third memory 82, a third communication circuit 85, a third inputter 86, and a third display 87. The third memory 82 includes a storage medium that is readable by the third processor 80.

As illustrated in FIG. 22, the simulator 8 is capable of executing a processing simulation that virtually processes the workpiece E. The workpiece E is virtually processed by the simulator 8 executing the processing simulation.

In the example illustrated in FIG. 21, the simulator 8 executes the processing simulation by virtually executing the processing program PM stored in the third memory 82. Note that, as used herein, the simulator 8 virtually executing the processing program PM encompasses the simulator 8 executing the processing program PM via the second calculation program PG2. In other words, the simulator 8 may process (in other words, interpret) the processing program PM by executing the second calculation program PG2. The simulator 8 virtually operates the plurality of control target devices of the machine tool 6 on the third display 87, based on the processing (in other words, based on the interpretation).

In the example illustrated in FIG. 21, the simulator 8 generates the three-dimensional shape data SH1 of the workpiece E by virtually executing the processing program PM. Further, the simulator 8 moves the tool T (for example, the cutting tool T1) relative to the workpiece E on the display 57 by virtually executing the processing program PM. In the example illustrated in FIG. 23, the simulator 8 generates the three-dimensional shape data SH2 of the product P by virtually executing the processing program PM.

### (CAD/CAM System 9)

As illustrated in FIG. 24, the numerical controller 5 may be configured to be communicable with the CAD/CAM system 9. As used herein, the "CAD/CAM system" means a system that is provided separately from the numerical controller 5 and creates shape data and NC data of a workpiece with the aid of a computer. Additionally, the CAD/CAM system 9 may create the shape data of the product.

In the example illustrated in FIG. 25, the CAD/CAM system 9 includes a fourth processor 90, a fourth memory 92, a fourth communication circuit 95, a fourth inputter 96, and a fourth display 97. The fourth memory 92 includes a storage medium that is readable by the fourth processor 90.

### (Calculation of First Weight w1)

The weight of the workpiece E (in other words, the first weight w1) may be calculated by the robot controller 3, the numerical controller 5, or any computer (such as the simulator 8 or the CAD/CAM system 9) communicable with the numerical controller 5. The first weight w1 is calculated based on the volume of the workpiece E (in other words, the first volume v1) and the density of the material constituting the workpiece E (in other words, the first density d1). More specifically, the first weight w1 is obtained by multiplication of the first volume v1 and the first density d1. Note that, when the material constituting the workpiece E includes a first material and a second material, the first weight w1 is calculated based on the volume of a portion constituted by the first material, the density of the first material, the volume of a portion constituted by the second material, and the density of the second material.

### (Case Where First Weight w1 Is Calculated by Robot Controller 3)

As illustrated in FIG. 5, when the first weight w1 is calculated by the robot controller 3, the robot controller 3 receives the first basic data A1 for calculating the first weight w1 from the numerical controller 5.

The first basic data A1 that the robot controller 3 receives from the numerical controller 5 may include the workpiece volume data V1 indicating the first volume v1. In this case, the robot controller 3 calculates the first weight w1, based on the workpiece volume data V1 received from the numerical controller 5 and the workpiece density data D1 stored in the second memory 32.

The first basic data A1 that the robot controller 3 receives from the numerical controller 5 may include the workpiece volume data V1 and the workpiece density data D1. In this case, the robot controller 3 calculates the first weight w1, based on the workpiece volume data V1 and the workpiece density data D1, which are received from the numerical controller 5.

The first basic data A1 that the robot controller 3 receives from the numerical controller 5 may include shape data of the workpiece E. In this case, the robot controller 3 derives the workpiece volume data V1, based on the shape data of the workpiece E. Additionally, the robot controller 3 calculates the first weight w1, based on the workpiece volume data V1 and the workpiece density data D1.

### (Case Where First Weight w1 Is Calculated by Numerical Controller 5)

As illustrated in FIG. 4, when the first weight w1 is calculated by the numerical controller 5, the numerical controller 5 calculates the first weight w1, based on the workpiece volume data V1 and the workpiece density data D1. Additionally, the numerical controller 5 transmits the workpiece weight data W1, which indicates the first weight w1, to the robot controller 3.

### (Case Where First Weight w1 Is Calculated by Any Computer Other Than Numerical Controller 5 or Robot Controller 3)

When the first weight w1 is calculated by any computer (such as the simulator 8 or the CAD/CAM system 9) other than the numerical controller 5 or the robot controller 3, the computer (such as the simulator 8 or the CAD/CAM system 9) calculates the first weight w1, based on the workpiece volume data V1 and the workpiece density data D1. The numerical controller 5 receives the workpiece weight data W1, which indicates the first weight w1, from the computer (such as the simulator 8 or the CAD/CAM system 9). Additionally, the numerical controller 5 transmits the workpiece weight data W1, which indicates the first weight w1, to the robot controller 3.

### (Calculation of Second Weight w2)

The weight of the product P (in other words, the second weight w2) may be calculated by the robot controller 3, the numerical controller 5, or any computer (such as the simulator 8 or the CAD/CAM system 9) communicable with the numerical controller 5. The second weight w2 is calculated based on the volume of the product P (in other words, the second volume v2), the density of the material constituting the product P (in other words, the second density d2). More specifically, the second weight w2 is obtained by multiplication of the second volume v2 and the second density d2. Note that, the second density d2 is generally the same as the first density d1 (in other words, the density of the material constituting the workpiece E). When the material constituting the product P includes a first material and a second material, the second weight w2 is calculated based on the volume of a portion constituted by the first material, the density of the first material, the volume of a portion constituted by the second material, and the density of the second material.

### (Case Where Second Weight w2 Is Calculated by Robot Controller 3)

As illustrated in FIG. 12, when the second weight w2 is calculated by the robot controller 3, the robot controller 3 receives the second basic data A2 for calculating the second weight w2 from the numerical controller 5.

The second basic data A2 that the robot controller 3 receives from the numerical controller 5 may include the product volume data V2. In this case, the robot controller 3 calculates the second weight w2, based on the product volume data V2 received from the numerical controller 5 and the product density data D2 stored in the second memory 32. Note that, the product density data D2 is generally the same as the workpiece density data D1.

The second basic data A2 that the robot controller 3 receives from the numerical controller 5 may include the product volume data V2 and the product density data D2. In this case, the robot controller 3 calculates the second weight w2, based on the product volume data V2 received from the numerical controller 5 and the product density data D2 received from the numerical controller 5.

The second basic data A2 that the robot controller 3 receives from the numerical controller 5 may include the shape data of the product P. In this case, the robot controller 3 derives the product volume data V2, based on the shape data of the product P. Additionally, the robot controller 3 calculates the second weight w2, based on the product volume data V2 and the product density data D2.

### (Case Where Second Weight w2 Is Calculated by Numerical Controller 5)

As illustrated in FIG. 11, when the second weight w2 is calculated by the numerical controller 5, the numerical controller 5 calculates the second weight w2, based on the product volume data V2 and the product density data D2. Additionally, the numerical controller 5 transmits the product weight data W2, which indicates the second weight w2, to the robot controller 3. Note that, the product density data D2 is generally the same as the workpiece density data D1.

### (Case Where Second Weight w2 Is Calculated by Any Computer Other Than Numerical controller 5 or Robot Controller 3)

When the second weight w2 is calculated by any computer (such as the simulator 8 or the CAD/CAM system 9) other than the numerical controller 5 or the robot controller 3, the computer (such as the simulator 8 or the CAD/CAM system 9) calculates the second weight w2, based on the product volume data V2 and the product density data D2. The numerical controller 5 receives the product weight data W2, which indicates the second weight w2, from the computer (such as the simulator 8 or the CAD/CAM system 9). Additionally, the numerical controller 5 transmits the product weight data W2, which indicates the second weight w2, to the robot controller 3.

### (First Calculation Mode M1)

In the example illustrated in FIG. 4, the numerical controller 5 is capable of executing a first calculation mode M1 that calculates the first weight w1, based on the workpiece volume data V1, which indicates the first volume v1, and the workpiece density data D1 indicating the first density d1.

In the example illustrated in FIG. 4, the memory 52 stores the workpiece volume data V1 and the workpiece density data D1. Additionally, the memory 52 stores a calculation program PG to be executed by the processor 50. In the example illustrated in FIG. 4, the numerical controller 5 (more specifically, the processor 50) calculates the first weight w1, based on the workpiece volume data V1 and the workpiece density data D1 by executing the calculation program PG. More specifically, the processor 50 that executes the calculation program PG calculates the first weight w1 by multiplying the first volume v1 by the first density d1. The calculated first weight w1 is stored in the memory 52 as the workpiece weight data W1.

In the example illustrated in FIG. 26, the memory 52 stores the workpiece volume data V1, the associated data r1 (refer to FIG. 27), which associates the plurality of materials and the densities of the plurality of materials with each other, and data m1 that specifies the material constituting the workpiece E. As illustrated in FIG. 28, the numerical controller 5 may acquire the data m1, which specifies the material constituting the workpiece E, via the inputter 56. In other words, the data m1, which specifies the material constituting the workpiece E, may be inputted to the numerical controller 5 by the operator via the inputter 56. Alternatively, the numerical controller 5 may acquire the data m1, which specifies the material constituting the workpiece E, from other computer.

In the example illustrated in FIG. 26, the numerical controller 5 (more specifically, the processor 50) derives the density of the material constituting the workpiece E (in other words, the first density d1), based on the data m1, which specifies the material constituting the workpiece E, and the associated data r1, which associates the plurality of materials and the densities of the plurality of materials with each other, by executing the calculation program PG. The derived first density d1 is stored in the memory 52 as the workpiece density data D1. Additionally, the numerical controller 5 (more specifically, the processor 50) calculates the first weight w1, based on the workpiece volume data V1 and the workpiece density data D1 by executing the calculation program PG. More specifically, the processor 50 that executes the calculation program PG calculates the first weight w1 by multiplying the first volume v1 by the first density d1. The calculated first weight w1 is stored in the memory 52 as the workpiece weight data W1.

When the numerical controller 5 is capable of executing the first calculation mode M1, which calculates the first weight w1, based on the workpiece volume data V1 and the workpiece density data D1, the workload of measuring the weight of the workpiece E is not placed on the operator.

In FIGs. 4 and 26, a description has been given of an example in which the processor 50 of the numerical controller 5 calculates the first weight w1 by executing the calculation program PG. Alternatively, the first weight w1 may be calculated by the robot controller 3, the simulator 8, or the CAD/CAM system 9 by executing the calculation program PG on the second processor 30 of the robot controller 3, the third processor 80 of the simulator 8, or the fourth processor 90 of the CAD/CAM system 9. In other words, in the description of "(First Calculation Mode M1)", "the numerical controller 5", "the processor 50", "the memory 52", and "the inputter 56" may be respectively read as "the robot controller 3", "the second processor 30", "the second memory 32", and "the second inputter 36". Additionally, in the description of "(First Calculation Mode M1)", "the numerical controller 5", "the processor 50", "the memory 52", and "the inputter 56" may be respectively read as "the simulator 8", "the third processor 80", "the third memory 82", and "the third inputter 86". Additionally, in the description of "(First Calculation Mode M1)", "the numerical controller 5", "the processor 50", "the memory 52", and "the inputter 56" may be respectively read as "the CAD/CAM system 9", "the fourth processor 90", "the fourth memory 92", and "the fourth inputter 96".

### (Second Calculation Mode M2)

In the example illustrated in FIG. 4, the numerical controller 5 is capable of executing a second calculation mode M2 that calculates the first volume v1, based on the shape data SD of the workpiece to be used to generate the processing program PM.

As illustrated in FIG. 28, the numerical controller 5 may acquire the shape data SD of the workpiece E to be used to generate the processing program PM via the inputter 56. In other words, the shape data SD of the workpiece E to be used to generate the processing program PM may be inputted to the numerical controller 5 by the operator via the inputter 56. Alternatively, the shape data SD of the workpiece E to be used to generate the processing program PM may be acquired by the numerical controller 5 from other computer. The shape data SD of the workpiece E acquired by the numerical controller 5 is stored in the memory 52.

As illustrated in FIG. 28, when the workpiece E is a hollow circular rod, the shape data SD of the workpiece E includes an outer diameter SD1 of the workpiece E, an inner diameter SD2 of the workpiece E, and a height SD3 of the workpiece E.

In the example illustrated in FIG. 28, the numerical controller 5 (more specifically, the processor 50) calculates the first volume v1, based on the shape data SD of the workpiece E by executing the calculation program PG. For example, when the workpiece E is a hollow circular rod, the numerical controller 5 calculates the first volume v1, based on the outer diameter SD1 of the workpiece E, the inner diameter SD2 of the workpiece E, and the height SD3 of the workpiece E. More specifically, the numerical controller 5 calculates the first volume v1 by a numerical expression: "first volume v1 = π × height SD3 × (outer diameter SD1 × outer diameter SD1 - inner diameter SD2 × inner diameter SD2)/4". The calculated first volume v1 is stored in the memory 52 as the workpiece volume data V1.

Needless to say, when the shape of the workpiece E is other than the hollow circular rod, an algorithm for calculating the first volume v1 differs from the above-described algorithm. Any known algorithm is adoptable as the algorithm for calculating the volume of the workpiece E (in other words, the first volume v1), based on the shape data SD of the workpiece E.

In FIGs. 4 and 28, a description has been given of an example in which the processor 50 of the numerical controller 5 calculates the first volume v1 by executing the calculation program PG. Alternatively, the third processor 80 of the simulator 8 may calculate the first volume v1 by executing the calculation program PG. In other words, in the description of "(Second Calculation Mode M2)", "the numerical controller 5", "the processor 50", "the memory 52", and "the inputter 56" may be respectively read as "the simulator 8", "the third processor 80", "the third memory 82", and "the third inputter 86".

Alternatively, as illustrated in FIGs. 18 and 22, the numerical controller 5 or the simulator 8 may be capable of executing the second calculation mode M2, which calculates the first volume v1, based on the shape data of the workpiece E (more specifically, the three-dimensional shape data SH1 of the workpiece E) generated by executing the processing simulation. More specifically, the numerical controller 5 or the simulator 8 generates the shape data of the workpiece E (more specifically, the three-dimensional shape data SH1 of the workpiece E) by virtually executing the processing program PM. Additionally, the numerical controller 5 or the simulator 8 calculates the volume of the workpiece E (in other words, the first volume v1), based on the shape data of the workpiece E (more specifically, the three-dimensional shape data SH1 of the workpiece E) by executing the calculation program PG. The calculated first volume v1 is stored in the memory 52 (or the third memory 82) as the workpiece volume data V1.

When the numerical controller 5 or the simulator 8 is capable of executing the second calculation mode M2, the numerical controller 5 or the simulator 8 calculates the first volume v1, based on the shape data SD of the workpiece E to be used to generate the processing program PM or the shape data of the workpiece E generated by executing the processing simulation. Thus, the operator is not required to input additional data only for calculating the first volume v1.

Further alternatively, the CAD/CAM system 9 may be capable of executing the second calculation mode M2, which calculates the first volume v1, based on the shape data of the workpiece E (more specifically, the three-dimensional shape data SH1 of the workpiece E).

In the example illustrated in FIG. 25, the CAD/CAM system 9 creates the shape data of the workpiece E (more specifically, the three-dimensional shape data SH1 of the workpiece E), based on the data inputted via the fourth inputter 96 or the fourth communication circuit 95 by executing a drawing program 928 stored in the fourth memory 92. The CAD/CAM system 9 (more specifically, the fourth processor 90) calculates the volume of the workpiece E (in other words, the first volume v1), based on the shape data of the workpiece E (more specifically, the three-dimensional shape data SH1 of the workpiece E) by executing the calculation program PG. The calculated first volume v1 is stored in the fourth memory 92 as the workpiece volume data V1.

When the first volume v1 is calculated by the simulator 8 or the CAD/CAM system 9, the workpiece volume data V1, which indicates the first volume v1, is transmitted to the numerical controller 5. Alternatively, the simulator 8 or the CAD/CAM system 9 may derive the workpiece weight data W1, based on the workpiece volume data V1, which indicates the first volume v1, and the workpiece density data D1. In this case, the workpiece weight data W1, which indicates the first weight w1, is transmitted from the simulator 8 or the CAD/CAM system 9 to the numerical controller 5.

The first volume v1 calculated in the second calculation mode M2 is used by at least one of the robot controller 3, the numerical controller 5, the simulator 8, and the CAD/CAM system 9 when the above-described first calculation mode M1 is executed. For example, the numerical controller 5 calculates the first weight w1, based on the first volume v1 calculated by executing the second calculation mode M2 and the workpiece density data D1.

### (Processing Program Generation Mode MA)

The numerical controller 5 is capable of executing a processing program generation mode MA that generates the processing program PM.

In the example illustrated in FIG. 29, the numerical controller 5 (more specifically, the processor 50) is capable of executing the processing program generation mode MA, which generates the processing program PM, based on the shape data SD of the workpiece E (refer to FIG. 28), data DA2 that specifies the kind of a processing tool, data DA3 that specifies a processing range, and data DA4 that specifies a processing speed. The processing program PM generated by the numerical controller 5 is stored in the memory 52.

The data DA2 that specifies the kind of the processing tool includes data that specifies, for example, whether the processing tool is a turning tool, a milling tool, or other tool. The data DA3 that specifies the processing range includes, for example, data that specifies a depth of cut, data that specifies a starting point of cut, and data that specifies an end point of cut. The data DA4 that specifies the processing speed may include data that specifies a feed speed of the tool, data that specifies a rotation speed of the milling tool, or data that specifies a rotation speed to rotate the workpiece E.

In FIG. 29, a description has been given of the example in which the processing program PM is generated by the numerical controller 5. Alternatively, the processing program PM may be generated by the simulator 8. In other words, in the description of "(Processing Program Generation Mode MA)", "the numerical controller 5", "the processor 50", and "the memory 52" may be respectively read as "the simulator 8", "the third processor 80", and "the third memory 82". The processing program PM generated by the simulator 8 is transmitted to the numerical controller 5.

Alternatively, as illustrated in FIG. 30, the CAD/CAM system 9 (more specifically, the fourth processor 90) may be capable of executing the processing program generation mode MA, which generates the processing program (more specifically, an EIA program PM1), based on the shape data SD of the workpiece E, the data DA2 that specifies the kind of the processing tool, the data DA3 that specifies the processing range, and the data DA4 that specifies the processing speed. The processing program (more specifically, the EIA program PM1) generated by the CAD/CAM system 9 is transmitted to the numerical controller 5.

### (Third Calculation Mode M3)

In the example illustrated in FIG. 11, the numerical controller 5 is capable of executing a third calculation mode M3 that calculates the second weight w2, based on the product volume data V2 indicating the second volume v2 and the product density data D2 indicating the second density d2.

In the example illustrated in FIG. 11, the memory 52 stores the product volume data V2 and the product density data D2. Additionally, the memory 52 stores the calculation program PG to be executed by the processor 50. In the example illustrated in FIG. 11, the numerical controller 5 (more specifically, the processor 50) calculates the second weight w2, based on the product volume data V2 and the product density data D2 by executing the calculation program PG. More specifically, the processor 50 that executes the calculation program PG calculates the second weight w2 by multiplying the second volume v2 by the second density d2. The calculated second weight w2 is stored in the memory 52 as the product weight data W2.

In the example illustrated in FIG. 31, the memory 52 stores the product volume data V2, the associated data r1 (refer to FIG. 27), which associates the plurality of materials and the densities of the plurality of materials with each other, and data m2 that specifies the material constituting the product P. Note that, the data m2, which specifies the material constituting the product P, is generally the same as the data m1, which specifies the material constituting the workpiece E.

In the example illustrated in FIG. 31, the numerical controller 5 (more specifically, the processor 50) derives the density of the material constituting the product P (in other words, the second density d2), based on the data m2, which specifies the material constituting the product P, and the associated data r1, which associates the plurality of materials and the densities of the plurality of materials with each other, by executing the calculation program PG. The derived second density d2 is stored in the memory 52 as the product density data D2. Note that, when the product density data D2 is the same as the workpiece density data D1, a step of deriving the density of the material constituting the product P (in other words, the step of deriving the second density d2) is omitted.

In the example illustrated in FIG. 31, the numerical controller 5 (more specifically, the processor 50) calculates the second weight w2, based on the product volume data V2 and the product density data D2 by executing the calculation program PG. More specifically, the processor 50 that executes the calculation program PG calculates the second weight w2 by multiplying the second volume v2 by the second density d2. The calculated second weight w2 is stored in the memory 52 as the product weight data W2.

When the numerical controller 5 is capable of executing the third calculation mode M3, which calculates the second weight w2, based on the product volume data V2 and the product density data D2, the workload of measuring the weight of the product P is not placed on the operator.

In FIGs. 11 and 31, a description has been given of an example in which the processor 50 of the numerical controller 5 calculates the second weight w2 by executing the calculation program PG. Alternatively, the second weight w2 may be calculated by the robot controller 3, the simulator 8, or the CAD/CAM system 9 by executing the calculation program PG on the second processor 30 of the robot controller 3, the third processor 80 of the simulator 8, or the fourth processor 90 of the CAD/CAM system 9. In other words, in the description of "(Third Calculation Mode M3)", "the numerical controller 5", "the processor 50", and "the memory 52" may be respectively read as "the robot controller 3", "the second processor 30", and "the second memory 32". Additionally, in the description of "(Third Calculation Mode M3)", "the numerical controller 5", "the processor 50", and "the memory 52" may be respectively read as "the simulator 8", "the third processor 80", and "the third memory 82". Additionally, in the description of "(Third Calculation Mode M3)", "the numerical controller 5", "the processor 50", and "the memory 52" may be respectively read as "the CAD/CAM system 9", "the fourth processor 90", and "the fourth memory 92".

### (Fourth Calculation Mode M4)

In the example illustrated in FIG. 19, the numerical controller 5 is capable of executing a fourth calculation mode M4 that calculates the volume of the product P (in other words, the second volume v2), based on the processing simulation.

For example, the numerical controller 5 (more specifically, the processor 50) specifies, as a removal part, a part of the workpiece E that is to be brought into contact with the cutting tool by virtually executing the processing program PM. Additionally, the numerical controller 5 (more specifically, the processor 50) generates the three-dimensional shape data SH2 of the product P to be obtained by removing the removal part from the workpiece E by virtually executing the processing program PM. Additionally, the numerical controller 5 (more specifically, the processor 50) calculates the volume of the product P (in other words, the second volume v2), based on three-dimensional shape data SH2 of the product P by executing the calculation program PG. The calculated second volume v2 is stored in the memory 52 as the product volume data V2.

Alternatively, the numerical controller 5 (more specifically, the processor 50) specifies, as a removal part, a part of the workpiece E that is to be brought into contact with the cutting tool by virtually executing the processing program PM. Additionally, the numerical controller 5 (more specifically, the processor 50) calculates the volume of the removal part as a removal volume by executing the calculation program PG. Furthermore, the numerical controller 5 (more specifically, the processor 50) calculates, by executing the calculation program PG, the volume of the product P (in other words, the second volume v2) by subtracting the volume of the removal part from the volume of the workpiece E (in other words, the first volume v1). The calculated second volume v2 is stored in the memory 52 as the product volume data V2.

In FIG. 19, a description has been given of the example in which the numerical controller 5 calculates the second volume v2, based on the processing simulation. Alternatively, as illustrated in FIG. 23, the simulator 8 may calculate the second volume v2, based on the processing simulation. In other words, in the description of "(Fourth Calculation Mode M4)", "the numerical controller 5", "the processor 50", and "the memory 52" may be respectively read as "the simulator 8", "the third processor 80", and "the third memory 82".

As illustrated in FIG. 23, the second basic data A2 including the product volume data V2 derived by the simulator 8 (or the product weight data W2 derived based on the product volume data V2 and the product density data D2) is transmitted to the numerical controller 5.

When the numerical controller 5 or the simulator 8 is capable of executing the fourth calculation mode M4, the numerical controller 5 or the simulator 8 calculates the second volume v2, based on the processing simulation. Thus, the operator is not required to input additional data only for calculating the second volume v2.

Alternatively, the CAD/CAM system 9 may be capable of executing the fourth calculation mode M4, which calculates the second volume v2, based on the shape data of the product P (more specifically, the three-dimensional shape data SH2 of the product P).

In the example illustrated in FIG. 32, the CAD/CAM system 9 creates the shape data of the product P (more specifically, the three-dimensional shape data SH2 of the product P), based on the data inputted via the fourth inputter 96 or the fourth communication circuit 95, by executing the drawing program 928 stored in the fourth memory 92. Additionally, the CAD/CAM system 9 (more specifically, the fourth processor 90) calculates the volume of the product P (in other words, the second volume v2), based on the shape data of the product P (more specifically, the three-dimensional shape data SH2 of the product P), by executing the calculation program PG. The calculated second volume v2 is stored in the fourth memory 92 as the product volume data V2.

As illustrated in FIG. 32, the second basic data A2 including the product volume data V2 derived by the CAD/CAM system 9 (or the product weight data W2 derived based on the product volume data V2 and the product density data D2) is transmitted to the numerical controller 5.

The second volume v2 calculated by the fourth calculation mode M4 is used by at least one of the robot controller 3, the numerical controller 5, the simulator 8, and the CAD/CAM system 9 when the above-described third calculation mode M3 is executed. For example, the numerical controller 5 calculates the second weight w2, based on the second volume v2 calculated by executing the fourth calculation mode M4 and the product density data D2 stored in the memory 52.

### (Data Transmitted from Numerical Controller 5 to Robot Controller 3)

In the example illustrated in FIG. 4, the numerical controller 5 transmits the workpiece weight data W1, which indicates the first weight w1, to the robot controller 3. Alternatively, as illustrated in FIG. 5, the numerical controller 5 may transmit the first basic data A1 for calculating the first weight w1 to the robot controller 3.

The robot controller 3 sets the workpiece weight data W1, which indicates the first weight w1, as one of the control parameters Q of the robot 2 (for example, refer to FIG. 3). When the workpiece weight data W1 is reflected in the control parameters Q of the robot 2, it is possible for the robot controller 3 to more accurately execute the position control of the workpiece E. For example, it is possible for the robot controller 3 to control the operation of the arm 21 taking into consideration, for example, distortion of the arm 21 caused due to the weight of the workpiece E. Additionally, with the control parameters Q being more appropriately set, erroneous detection is less likely to occur regarding detection of a collision between the robot 2 loading the workpiece E and other object.

The control parameters Q may be set as one of collision determination parameters for detecting a collision between the robot 2 and an obstacle. For example, in the example illustrated in FIG. 4, the robot 2 includes an acceleration sensor 25. The acceleration sensor 25 may be disposed on the arm 21 or may be disposed on the gripper 23. The robot controller 3 determines whether there is a collision between the robot 2 or the workpiece E and an obstacle (for example, the operator or an item), based on the signal received from the acceleration sensor 25 and the collision determination parameters including the control parameters Q that reflect the workpiece weight data W1. Additionally, when it is determined that there is a collision between the robot 2 or the workpiece E and an obstacle, the robot controller 3 stops the operation of the robot 2. When the workpiece weight data W1 is not reflected in the control parameters Q, an erroneous detection of a collision occurs more easily. For example, when the acceleration rate indicated by the acceleration sensor 25 changes, the robot controller 3 is unable to accurately determine whether the change is caused due to a collision or due to an inertia of the workpiece E or the like.

In the example illustrated in FIG. 11, the numerical controller 5 transmits the product weight data W2, which indicates the second weight w2, to the robot controller 3. Alternatively, as illustrated in FIG. 12, the numerical controller 5 may transmit the second basic data A2 for calculating the second weight w2 to the robot controller 3.

The robot controller 3 sets the product weight data W2, which indicates the second weight w2, as one of the control parameters Q of the robot 2 (for example, refer to FIG. 10). When the product weight data W2 is reflected in the control parameters Q of the robot 2, it is possible for the robot controller 3 to more accurately execute the position control of the product P. For example, it is possible for the robot controller 3 to control the operation of the arm 21 taking into consideration, for example, distortion of the arm 21 caused due to the weight of the product P. Additionally, with the control parameters Q being more appropriately set, erroneous detection is less likely to occur regarding detection of a collision between the robot 2 unloading the product P and other object. The control parameters Q that reflect the product weight data W2 may be set as one of the collision determination parameters for detecting a collision between the robot 2 and an obstacle.

As illustrated in FIG. 33, the numerical controller 5 may transmit, to the robot controller 3, first data DT1 that specifies the external dimension of the workpiece and/or second data DT2 that specifies the external dimension of a component of the machine tool. Additionally, the numerical controller 5 may transmit, to the robot controller 3, third data DT3 that identifies a holder on which the workpiece E is to be mounted. In the example illustrated in FIG. 33, the first data DT1 includes a height dimension h1 of the workpiece E and a gripping height h2 of the workpiece E. The second data DT2 incudes a height dimension h3 of a jaw. Additionally, the third data DT3 includes identification data hd1 that specifies the work holder 62.

The robot controller 3 sets the loading path data 326, based on the first data DT1, the second data DT2, and the third data DT3, for example. Additionally, the robot controller 3 controls the loading operation of the robot 2 (in other words, an operation of the robot 2 loading the workpiece E onto the machine tool 6), based on the control parameters Q that reflect the workpiece weight data W1 and the loading path data 326.

As illustrated in FIG. 34, the numerical controller 5 may transmit, to the robot controller 3, fourth data DT4 that specifies the external dimension of the product P and/or fifth data DT5 that specifies the external dimension of a component of the machine tool. Additionally, the numerical controller 5 may transmit, to the robot controller 3, sixth data DT6 that identifies a holder from which the product P is to be removed. In the example illustrated in FIG. 34, the fourth data DT4 includes a height dimension h4 of the product P and a gripping height h5 of the product P. The fifth data DT5 incudes a height dimension h6 of a jaw. Additionally, the sixth data DT6 includes identification data hd2 that specifies the second work holder 65.

The robot controller 3 sets the unloading path data 327, based on the fourth data DT4, the fifth data DT5, and the sixth data DT6, for example. Additionally, the robot controller 3 controls the unloading operation of the robot 2 (in other words, an operation of the robot 2 unloading the product P from the machine tool 6), based on the control parameters Q that reflect the product weight data W2 and the unloading path data 327.

The example illustrated in FIG. 35 assumes a procedure in which (1) the workpiece E that is loaded onto the machine tool 6 by the robot 2 is mounted on the work holder 62, (2) the workpiece E having been partially processed is transferred from the work holder 62 to the second work holder 65, (3) the workpiece E supported by the second work holder 65 is processed into the product P, and (4) the product P supported by the second work holder 65 is passed to the robot 2. In this case, the sixth data DT6 described above differs from the third data DT3 described above. Meanwhile, the example illustrated in FIG. 13 assumes a procedure in which the product P supported by the work holder 62 is passed to the robot 2. In this case, the sixth data DT6 described above is the same as the third data DT3 described above.

### (Second Embodiment)

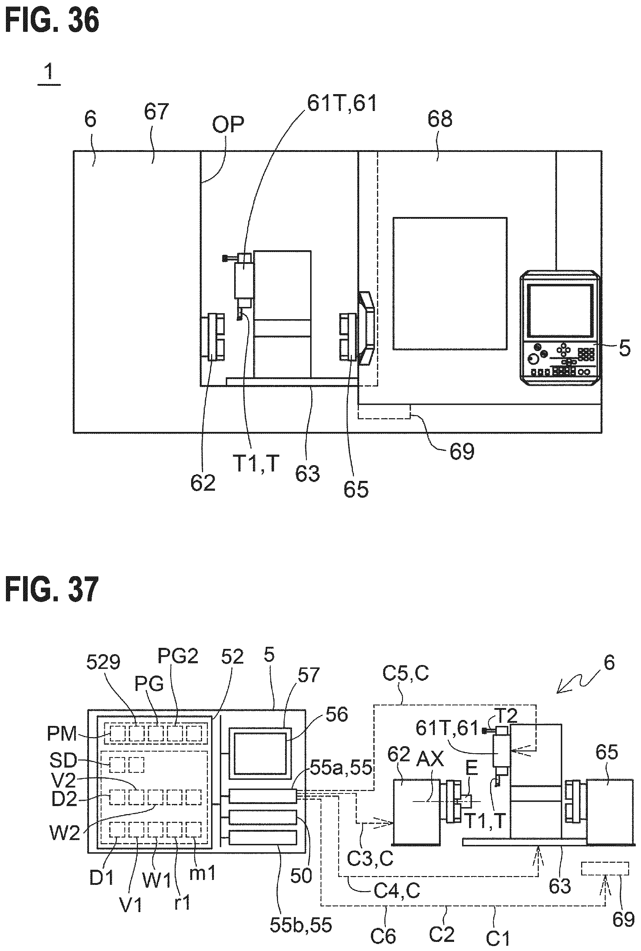

The machine tool system 1 according to a second embodiment will be described with reference to FIGs. 1 to 37. FIG. 36 is a diagram schematically illustrating the machine tool system 1 according to the second embodiment. FIG. 37 is a diagram schematically illustrating a state in which the numerical controller 5 is capable of controlling the control target devices.

In the second embodiment, the differences from the first embodiment will mainly be described. Meanwhile, in the second embodiment, redundant descriptions of items that have already been described in the first embodiment are omitted. Therefore, in the second embodiment, even without an explicit description, it goes without saying that the items that have already been described in the first embodiment may be applied to the second embodiment. Vice versa, all the items described in the second embodiment are applicable to the first embodiment.

As illustrated in FIG. 36, the machine tool system 1 according to the second embodiment includes the machine tool 6 and the numerical controller 5.

In the example illustrated in FIG. 36, the machine tool 6 includes the processing head 61 (for example, the turret 61T), which holds the tool T, the work holder 62, which supports the workpiece, and the mover 63, which moves the processing head 61 relative to the work holder 62. The machine tool 6 may include the wall 67, the door 68, and the door mover 69. The wall 67 is provided with the opening OP through which the workpiece and/or the product is allowed to pass. The door 68 opens and closes the opening OP. The door mover 69 moves the door 68. Additionally, the machine tool 6 may include the second work holder 65 provided separately from the work holder 62.

As illustrated in FIG. 35, the machine tool 6 receives the workpiece E from the robot 2 controlled by the robot controller 3. Additionally, as illustrated in FIG. 37, the machine tool 6 processes the workpiece E into a product, based on the operation commands C to be received from the numerical controller 5.

In the example illustrated in FIG. 4, the numerical controller 5 transmits the workpiece weight data W1 to the robot controller 3 so that the workpiece weight data W1, which indicates the first weight w1, is set as one of the control parameters Q of the robot 2. The robot controller 3 that receives the workpiece weight data W1 sets the workpiece weight data W1 as one of the control parameters Q of the robot 2 (for example, refer to FIG. 3).

Alternatively, in the example illustrated in FIG. 5, the numerical controller 5 transmits the first basic data A1 for calculating the first weight w1 to the robot controller 3 so that the workpiece weight data W1, which indicates the first weight w1, is set as one of the control parameters Q of the robot 2. The first basic data A1 includes, for example, the workpiece volume data V1. The first basic data A1 may include the workpiece volume data V1 and workpiece density data D1.

The robot controller 3 that receives the first basic data A1 derives the workpiece weight data W1, based on the first basic data A1, and sets the workpiece weight data W1 as one of the control parameters Q of the robot 2 (for example, refer to FIG. 3).

In the example illustrated in FIG. 33, the numerical controller 5 transmits, to the robot controller 3, the first data DT1, which specifies the external dimension of the workpiece, the second data DT2, which specifies the external dimension of the component of the machine tool, and/or the third data DT3, which identifies the holder on which the workpiece E is to be mounted. The robot controller 3 sets the loading path data 326, which specifies the loading path of the workpiece, based on, for example, the first data DT1, the second data DT2, the third data DT3, and the position data of the component of the machine tool (for example, the position data of the work holder 62 and the position data of the opening portion OP).

In the example illustrated in FIG. 37, the numerical controller 5 generates the operation commands C by executing the processing program PM associated with the workpiece E. The operation commands C that have been generated are transmitted from the numerical controller 5 to the machine tool 6, and the machine tool 6 processes the workpiece E into a product, based on the operation commands C received from the numerical controller 5.

The machine tool 6, the numerical controller 5, the robot 2, and the robot controller 3 have been described in the first embodiment, and therefore redundant descriptions for the machine tool 6, the numerical controller 5, the robot 2, and the robot controller 3 will be omitted.

The machine tool system 1 according to the second embodiment has similar advantages as the processing system 100 according to the first embodiment.

As illustrated in FIG. 35, the machine tool 6 may be configured to be capable of passing the product P to the robot 2 controlled by the robot controller 3.

In the example illustrated in FIG. 11, the numerical controller 5 transmits the product weight data W2 to the robot controller 3 so that the product weight data W2 is set as one of the control parameters Q of the robot 2. The robot controller 3 that receives the product weight data W2 sets the product weight data W2 as one of the control parameters Q of the robot 2 (for example, refer to FIG. 10).

Alternatively, in the example illustrated in FIG. 12, the numerical controller 5 transmits the second basic data A2 for calculating the second weight w2 to the robot controller 3 so that the product weight data W2 is set as one of the control parameters Q of the robot 2. The second basic data A2 includes, for example, the product volume data V2. The second basic data A2 may include the product volume data V2 and the product density data D2. Note that, the product density data D2 is generally the same as the workpiece density data D1.

The robot controller 3 that receives the second basic data A2 derives the product weight data W2, based on the second basic data A2, and sets the product weight data W2 as one of the control parameters Q of the robot 2 (for example, refer to FIG. 10).

In the example illustrated in FIG. 34, the numerical controller 5 transmits, to the robot controller 3, the fourth data DT4, which specifies the external dimension of the product P, the fifth data DT5, which specifies the external dimension of the component of the machine tool, and/or the sixth data DT6, which identifies the holder from which the product P is to be removed. The robot controller 3 sets the unloading path data 327, which specifies the unloading path of the product, based on, for example, the fourth data DT4, the fifth data DT5, the sixth data DT6, and the position data of the component of the machine tool (for example, the position data of the second work holder 65 and the position data of the opening portion OP).

### (Optional Configurations)

Next, optional configurations adoptable by the machine tool system 1 according to the second embodiment (or the processing system 100 according to the first embodiment) will be described with reference to FIGs. 1 to 37.

### (Operation Commands C)

In the example illustrated in FIG. 37, the numerical controller 5 generates a first operation command C1 by executing the processing program PM. The door mover 69 that receives the first operation command C1 from the numerical controller 5 moves the door 68 from a closed position (in other words, a position at which the opening portion OP is closed) to an open position (in other words, a position at which the opening portion OP is opened). The robot controller 3 controls the loading operation of the robot 2, based on the control parameters Q that reflect the workpiece weight data W1 and the loading path data 326 so that the workpiece E is carried to the work holder 62 via the opening portion OP.

In the example illustrated in FIG. 37, the numerical controller 5 generates a second operation command C2 by executing the processing program PM. The door mover 69 that receives the second operation command C2 from the numerical controller 5 moves the door 68 from the open position (in other words, the position at which the opening portion OP is opened) to the closed position (in other words, the position at which the opening portion OP is closed).

In the example illustrated in FIG. 37, the numerical controller 5 generates a third operation command C3 by executing the processing program PM. The work holder 62 that receives the third operation command C3 from the numerical controller 5 rotates a support that supports the workpiece E (for example, a jaw that grips the workpiece E) about a first axis AX. Additionally, the numerical controller 5 generates a fourth operation command C4 by executing the processing program PM. The mover 63 that receives the fourth operation command C4 from the numerical controller 5 moves the processing head 61 relative to the work holder 62 so that the tool T comes into contact with the workpiece E. Thus, the workpiece E is cut by the tool T. The numerical controller 5 may generate a fifth operation command C5 by executing the processing program PM. The processing head 61 that receives the fifth operation command C5 from the numerical controller 5 rotates a tool T2 about a central axis of the tool. Thus, the workpiece E is milled by the tool T2.

The numerical controller 5 may generate a transfer command by executing the processing program PM. The machine tool 6 that receives the transfer command transfers the workpiece E from the work holder 62 to the second work holder 65. The transferring may be performed by the work holder 62 and the second work holder 65 by themselves, or may be performed by a transfer device provided separately from the work holder 62 and the second work holder 65.

In the example illustrated in FIG. 37, the numerical controller 5 generates a sixth operation command C6 by executing the processing program PM. The door mover 69 that receives the sixth operation command C6 from the numerical controller 5 moves the door 68 from the closed position (in other words, the position at which the opening portion OP is closed) to the open position (in other words, the position at which the opening portion OP is opened). The robot controller 3 controls the unloading operation of the robot 2, based on the control parameters Q that reflect the product weight data W2 and the unloading path data 327 so that the product P is taken out from the machine tool 6 via the opening portion OP.

### (Robot Controller 3)

In the example illustrated in FIG. 35, the numerical controller 5 is communicably coupled to the robot controller 3. The numerical controller 5 and the robot controller 3 may be coupled to each other by wired or wireless connection. When the numerical controller 5 and the robot controller 3 are incorporated in one unit, the numerical controller 5 and the robot controller 3 may be communicably coupled to each other by a bus.

### (Simulator 8)

In the example illustrated in FIG. 20, the numerical controller 5 is communicably coupled to the simulator 8. The numerical controller 5 and the simulator 8 may be coupled to each other by wired or wireless connection.

### (CAD/CAM System 9)

In the example illustrated in FIG. 24, the numerical controller 5 is communicably coupled to the CAD/CAM system 9. The numerical controller 5 and the CAD/CAM system 9 may be coupled to each other by wired or wireless connection.

### (Second Calculation Mode M2)

In the example illustrated in FIG. 28, the numerical controller 5 is capable of executing the second calculation mode M2, which calculates the first volume v1 (in other words, the volume of the workpiece E), based on the shape data SD of the workpiece used to generate the processing program PM. In the example illustrated in FIG. 18, the numerical controller 5 is capable of executing the second calculation mode M2, which calculates the first volume v1 (in other words, the volume of the workpiece E), based on the shape data of the workpiece (more specifically, the three-dimensional shape data SH1 of the workpiece E) generated by executing the processing simulation. The first volume v1 that is calculated by executing the second calculation mode M2 is stored in the memory 52 as the workpiece volume data V1.

Alternatively, as illustrated in FIG. 22, the simulator 8 may be capable of executing the second calculation mode M2, which calculates the first volume v1 (in other words, the volume of the workpiece E), based on the shape data SD of the workpiece used to generate the processing program PM or on the shape data of the workpiece (more specifically, the three-dimensional shape data SH1 of the workpiece E) generated by executing the processing simulation. Further alternatively, as illustrated in FIG. 25, the CAD/CAM system 9 may be capable of executing the second calculation mode M2, which calculates the first volume v1 (in other words, the volume of the workpiece E), based on the shape data of the workpiece (more specifically, the three-dimensional shape data SH1 of the workpiece E).

When the second calculation mode M2 is executed by the simulator 8 or the CAD/CAM system 9, the numerical controller 5 is configured to receive the workpiece volume data V1 or the workpiece weight data W1 (more specifically, the workpiece weight data W1 derived based on the workpiece volume data V1 and the workpiece density data D1) from the simulator 8 or the CAD/CAM system 9.

The second calculation mode M2 has already been described in the first embodiment, and therefore a redundant description for the second calculation mode M2 will be omitted.

### (First Calculation Mode M1)

In the example illustrated in FIG. 4, the numerical controller 5 is capable of executing the first calculation mode M1, which calculates the first weight w1 (in other words, the weight of the workpiece E), based on the workpiece volume data V1 and the workpiece density data D1. The first weight w1 that is calculated by executing the first calculation mode M1 is stored in the memory 52 as the workpiece weight data W1. Additionally, the numerical controller 5 transmits the workpiece weight data W1 to the robot controller 3.

Alternatively, the simulator 8 or the CAD/CAM system 9 may be capable of executing the first calculation mode M1, which calculates the first weight w1 (in other words, the weight of the workpiece E), based on the workpiece volume data V1 and the workpiece density data D1. In this case, the numerical controller 5 is configured to receive the workpiece weight data W1, which indicates the first weight w1, from the simulator 8 or the CAD/CAM system 9.

The first calculation mode M1 has already been described in the first embodiment, and therefore a redundant description for the first calculation mode M1 will be omitted.

In the example illustrated in FIG. 19, the numerical controller 5 is capable of executing the fourth calculation mode M4, which calculates the volume of the product P (in other words, the second volume v2), based on the processing simulation. The second volume v2 calculated by executing the fourth calculation mode M4 is stored in the memory 52 as the product volume data V2.

Alternatively, as illustrated in FIG. 23, the simulator 8 may be capable of executing the fourth calculation mode M4, which calculates the volume of the product P (in other words, the second volume v2), based on the processing simulation. Further alternatively, as illustrated in FIG. 32, the CAD/CAM system 9 may be capable of executing the fourth calculation mode M4, which calculates the second volume v2, based on the shape data of the product P (more specifically, the three-dimensional shape data SH2 of the product P).

When the fourth calculation mode M4 is executed by the simulator 8 or the CAD/CAM system 9, the numerical controller 5 is configured to receive the product volume data V2 or the product weight data W2 (more specifically, the product weight data W2 derived based on the product volume data V2 and the product density data D2) from the simulator 8 or the CAD/CAM system 9.

The fourth calculation mode M4 has already been described in the first embodiment, and therefore a redundant description for the fourth calculation mode M4 will be omitted.

### (Third Calculation Mode M3)

In the example illustrated in FIG. 11, the numerical controller 5 is capable of executing the third calculation mode M3, which calculates the second weight w2 (in other words, the weight of the product P), based on the product volume data V2 and the product density data D2. The second weight w2 calculated by executing the third calculation mode M3 is stored in the memory 52 as the product weight data W2. Additionally, the numerical controller 5 transmits the product weight data W2 to the robot controller 3. Note that, the product density data D2 is generally the same as the workpiece density data D1.

Alternatively, the simulator 8 or the CAD/CAM system 9 may be capable of executing the third calculation mode M3, which calculates the second weight w2 (in other words, the weight of the product P), based on the product volume data V2 and the product density data D2. In this case, the numerical controller 5 is configured to receive the product weight data W2, which indicates the second weight w2, from the simulator 8 or the CAD/CAM system 9.

The third calculation mode M3 has already been described in the first embodiment, and therefore a redundant description for the third calculation mode M3 will be omitted.

### (Processing Program Generation Mode MA)

In the example illustrated in FIG. 29, the numerical controller 5 is capable of executing the processing program generation mode MA, which generates the processing program PM. The processing program PM generated by executing the processing program generation mode MA is stored in the memory 52.

Alternatively, the simulator 8 may be capable of executing the processing program generation mode MA, which generates the processing program PM. Further alternatively, the CAD/CAM system 9 may be capable of executing the processing program generation mode MA, which generates the processing program (more specifically, the EIA program PM1).

When the processing program is generated by the simulator 8 or the CAD/CAM system 9, the numerical controller 5 is configured to receive the processing program from the simulator 8 or the CAD/CAM system 9.

The processing program generation mode MA has already been described in the first embodiment, and therefore a redundant description for the processing program generation mode MA will be omitted.

### (Third Embodiment)

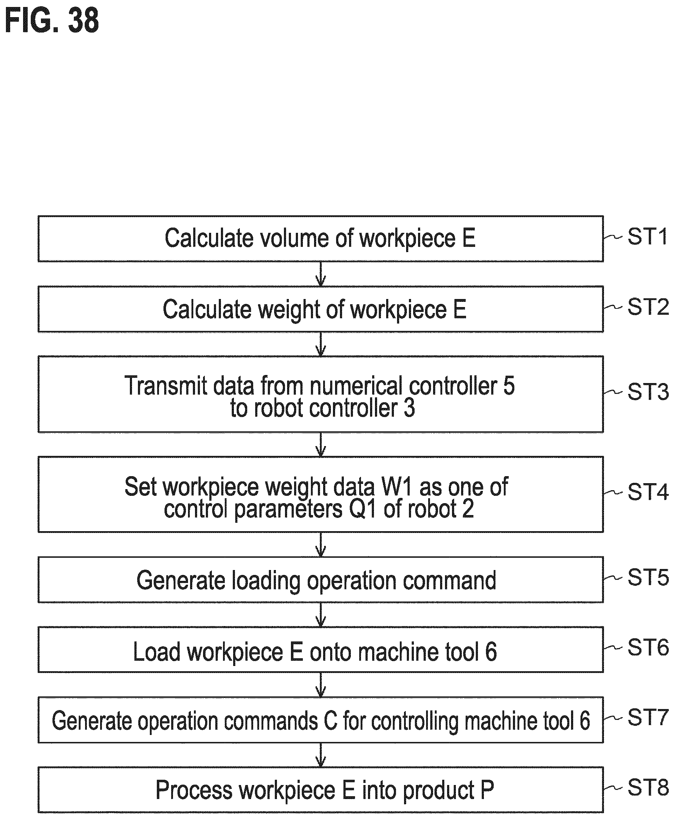

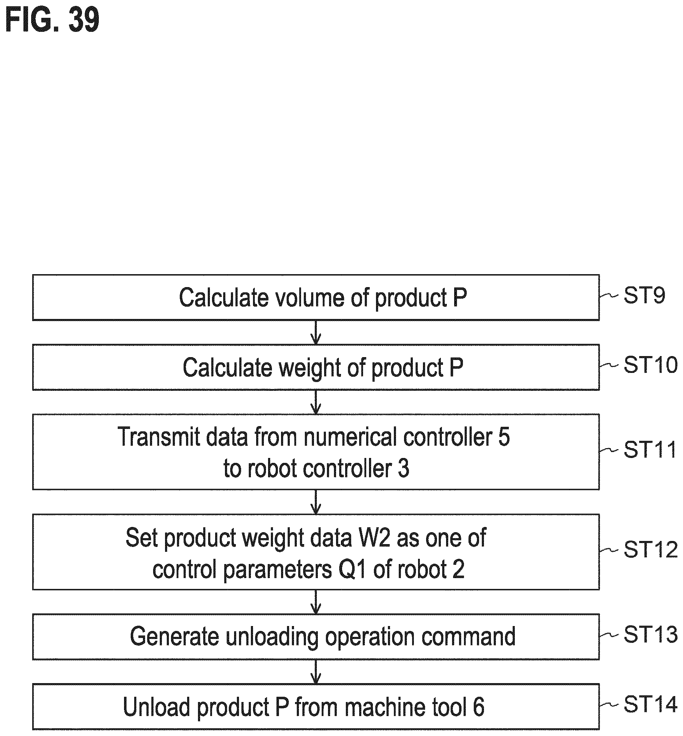

A workpiece processing method according to a third embodiment will be described with reference to FIGs. 1 and 39. FIGs. 38 and 39 are flowcharts illustrating an example of the workpiece processing method according to the third embodiment.

The workpiece processing method according to the third embodiment may be performed using the processing system 100 according to the first embodiment or other processing system. The processing system 100 has already been described in the first embodiment, and therefore a redundant description for the processing system 100 will be omitted. The workpiece processing method according to the third embodiment may be performed using the machine tool system 1 according to the second embodiment or other machine tool system. The machine tool system 1 has already been described in the second embodiment, and therefore a redundant description for the machine tool system 1 will be omitted.

At a first step ST1, the volume of the workpiece E is calculated. The first step ST1 is a workpiece volume calculation step. In the workpiece volume calculation step, at least one of the robot controller 3, the numerical controller 5, the simulator 8, and the CAD/CAM system 9 calculates the first volume v 1 (in other words, the volume of the workpiece E), based on the shape data of the workpiece E.

In the example illustrated in FIG. 28, the workpiece volume calculation step (the first step ST1) includes the numerical controller 5 (or the simulator 8) calculating the first volume v1, based on the shape data SD of the workpiece to be used to generate the processing program PM.

As illustrated in FIG. 28, the shape data SD of the workpiece E to be used to generate the processing program PM may be inputted to the numerical controller 5 by the operator via the inputter 56. Alternatively, the shape data SD of the workpiece E to be used to generate the processing program PM may be inputted to the numerical controller 5 from other computer via the communication circuit 55.

Alternatively, as illustrated in FIGs. 18 and 22, the workpiece volume calculation step (the first step ST1) may include the numerical controller 5 (or the simulator 8) calculating the first volume v1, based on the shape data of the workpiece E (more specifically, the three-dimensional shape data SH1 of the workpiece E) generated by executing the processing simulation. More specifically, the workpiece volume calculation step (the first step ST1) includes (1) the numerical controller 5 (or the simulator 8) generating the three-dimensional shape data SH1 of the workpiece E by virtually executing the processing program PM, and (2) the numerical controller 5 (or the simulator 8) calculating the first volume v1, based on the three-dimensional shape data SH1 of the workpiece E by executing the calculation program PG.

Further alternatively, as illustrated in FIG. 25, the workpiece volume calculation step (the first step ST1) may include the CAD/CAM system 9 calculating the first volume v1, based on the shape data of the workpiece E (more specifically, the three-dimensional shape data SH1 of the workpiece E).

When the calculation of the first volume v1 is performed by the numerical controller 5, the workpiece volume data V1, which indicates the first volume v1, is stored in the memory 52 of the numerical controller 5. When the calculation of the first volume v1 is performed by the robot controller 3, the workpiece volume data V1, which indicates the first volume v1, is stored in the second memory 32 of the robot controller 3. When the calculation of the first volume v1 is performed by the simulator 8, the workpiece volume data V1, which indicates the first volume v1, is stored in the third memory 82 of the simulator 8. When the calculation of the first volume v1 is performed by the CAD/CAM system 9, the workpiece volume data V1, which indicates the first volume v1, is stored in the fourth memory 92 of the CAD/CAM system 9.

When the calculation of the first volume v1 is performed by the simulator 8 or the CAD/CAM system 9, the workpiece volume data V1, which indicates the first volume v1, may be transmitted from the simulator 8 or the CAD/CAM system 9 to the numerical controller 5. In this case, the workpiece volume data V1 is stored in the memory 52 of the numerical controller 5. The workpiece volume data V1 may be transmitted from the numerical controller 5 to the robot controller 3 (refer to a third step ST3 to be described later). In this case, the workpiece volume data V1 is stored in the second memory 32 of the robot controller 3.

At a second step ST2, the first weight w1 (in other words, the weight of the workpiece E) is calculated. The second step ST2 is a workpiece weight calculation step. In the workpiece weight calculation step, at least one of the robot controller 3, the numerical controller 5, the simulator 8, and the CAD/CAM system 9 calculates the first weight w1, based on the workpiece volume data V1 and the workpiece density data D1.

In the example illustrated in FIG. 4, the memory 52 of the numerical controller 5 stores the workpiece volume data V1 and the workpiece density data D1. In this case, the workpiece weight calculation step (the second step ST2) may include the numerical controller 5, which executes the calculation program PG, calculating the first weight w1, based on the workpiece volume data V1 and the workpiece density data D1.

In the example illustrated in FIG. 26, the memory 52 of the numerical controller 5 stores the workpiece volume data V1, the associated data r1 (refer to FIG. 27), which associates the plurality of materials and the densities of the plurality of materials with each other, and the data m1, which specifies the material constituting the workpiece E. In this case, the workpiece weight calculation step (the second step ST2) may include the numerical controller 5, which executes the calculation program PG, calculating the first weight w1, based on the workpiece volume data V1, the associated data r1 described above, and the data m1, which specifies the material constituting the workpiece E. More specifically, the workpiece weight calculation step (the second step ST2) may include (1) the numerical controller 5 deriving the workpiece density data D1, based on the associated data r1 described above and the data m1, which specifies the material constituting the workpiece E, and (2) the numerical controller 5 calculating the first weight w1, based on the derived workpiece density data D1 and the workpiece volume data V1.

In the example illustrated in FIG. 21, the third memory 82 of the simulator 8 stores the workpiece volume data V1 and the workpiece density data D1. In this case, the workpiece weight calculation step (the second step ST2) may include the simulator 8, which executes the calculation program PG, calculating the first weight w1, based on the workpiece volume data V1 and the workpiece density data D1.

In the example illustrated in FIG. 21, the third memory 82 of the simulator 8 stores the workpiece volume data V1, the associated data r1 (refer to FIG. 27), which associates the plurality of materials and the densities of the plurality of materials with each other, and the data m1, which specifies the material constituting the workpiece E. In this case, the workpiece weight calculation step (the second step ST2) may include the simulator 8, which executes the calculation program PG, calculating the first weight w1, based on the workpiece volume data V1, the associated data r1 described above, and the data m1, which specifies the material constituting the workpiece E.

In the example illustrated in FIG. 5, the second memory 32 of the robot controller 3 stores the workpiece volume data V1 and the workpiece density data D1. In this case, the workpiece weight calculation step (the second step ST2) may include the robot controller 3, which executes the calculation program PG, calculating the first weight w1, based on the workpiece volume data V1 and the workpiece density data D1.

In the example illustrated in FIG. 25, the fourth memory 92 of the CAD/CAM system 9 stores the workpiece volume data V1 and the workpiece density data D1. In this case, the workpiece weight calculation step (the second step ST2) may include the CAD/CAM system 9, which executes the calculation program PG, calculating the first weight w1, based on the workpiece volume data V1 and the workpiece density data D1.

When the calculation of the first weight w1 is performed by the numerical controller 5, the workpiece weight data W1, which indicates the first weight w1, is stored in the memory 52 of the numerical controller 5. When the calculation of the first weight w1 is performed by the robot controller 3, the workpiece weight data W1, which indicates the first weight w1, is stored in the second memory 32 of the robot controller 3. When the calculation of the first weight w1 is performed by the simulator 8, the workpiece weight data W1, which indicates the first weight w1, is stored in the third memory 82 of the simulator 8. When the calculation of the first weight w1 is performed by the CAD/CAM system 9, the workpiece weight data W1, which indicates the first weight w1, is stored in the fourth memory 92 of the CAD/CAM system 9.

When the calculation of the first weight w1 is performed by the simulator 8 or the CAD/CAM system 9, the workpiece weight data W1, which indicates the first weight w1, is transmitted from the simulator 8 or the CAD/CAM system 9 to the numerical controller 5. In this case, the workpiece weight data W1 is stored in the memory 52 of the numerical controller 5. When the calculation of the first weight w1 is performed by those other than the robot controller 3, the workpiece weight data W1 is transmitted from the numerical controller 5 to the robot controller 3 (refer to the third step ST3 to be described later). In this case, the workpiece weight data W1 is stored in the second memory 32 of the robot controller 3.

At the third step ST3, the data is transmitted from the numerical controller 5 to the robot controller 3. The third step ST3 is a data transmission step.

The data transmission step (the third step ST3) includes transmitting at least one of the first basic data A1 (refer to FIG. 5) for calculating the first weight w1 and the workpiece weight data W1 (refer to FIG. 4) from the numerical controller 5 to the robot controller 3. Note that, when both the workpiece volume calculation step (the first step ST1) and the workpiece weight calculation step (the second step ST2) are performed by the robot controller 3, the step of transmitting at least one of the first basic data A1 and the workpiece weight data W1 from the numerical controller 5 to the robot controller 3 may be omitted.

The first basic data A1 includes, for example, the workpiece volume data V1. When the first basic data A1 is transmitted from the numerical controller 5 to the robot controller 3, the data transmission step (the third step ST3) is executed before the workpiece weight calculation step (the second step ST2). Additionally, in the workpiece weight calculation step (the second step ST2), the robot controller 3 calculates the first weight w1, based on the workpiece volume data V1 and the workpiece density data D1.

When the workpiece weight data W1 is transmitted from the numerical controller 5 to the robot controller 3, the data transmission step (the third step ST3) is executed after the workpiece weight calculation step (the second step ST2).

As illustrated in FIG. 33, the data transmission step (the third step ST3) may include transmitting, from the numerical controller 5 to the robot controller 3, the first data DT1, which specifies the external dimension of the workpiece, and/or the second data DT2, which specifies the external dimension of the component of the machine tool. Additionally, the data transmission step (the third step ST3) may include transmitting, from the numerical controller 5 to the robot controller 3, the third data DT3, which identifies the holder on which the workpiece E is to be mounted.

The data transmission step (the third step ST3) may be triggered by transmission of a data request signal from the robot controller 3 to the numerical controller 5. Alternatively, the data transmission step (the third step ST3) may be executed by the numerical controller 5 regardless of whether there is a request from the robot controller 3.

At a fourth step ST4, the robot controller 3 sets data for controlling the loading operation of the robot 2. The fourth step ST4 is a first setting step.

In the example illustrated in FIG. 3, the first setting step (the fourth step ST4) includes the robot controller 3 setting the workpiece weight data W1 as one of the control parameters Q of the robot 2. As illustrated in FIG. 3, the control parameters Q may include the weight data of each of the structures to be mounted on the distal end arm 21e.

The first setting step (the fourth step ST4) may include the robot controller 3 setting the loading path data 326, based on the above-described first data DT1, the above-described second data DT2, and the above-described third data DT3.

At a fifth step ST5, a loading operation command is generated. The fifth step ST5 is a first command generation step. The first command generation step (the fifth step ST5) includes the robot controller 3 generating the loading operation command, based on the control parameters Q that reflect the workpiece weight data W1 and the loading path data 326. The first command generation step (the fifth step ST5) may include, when the gripper 23 grips the workpiece E (more specifically, at any point in time within a period from immediately before the gripper 23 starts a gripping operation of the workpiece E to immediately after the gripper 23 completes the gripping operation of the workpiece E), the robot controller 3 switching the state of the workpiece weight data W1, which is one of the control parameters Q, from the non-active state to the active state. After the state of the workpiece weight data W1 is switched to the active state, the robot controller 3 generates the loading operation command of the robot 2, based on the control parameters Q in which the workpiece weight data W1 is activated and the loading path data 326, which specifies the loading path of the workpiece E.

At a sixth step ST6, the workpiece E is loaded onto the machine tool 6. The sixth step ST6 is a loading step. The loading step (the sixth step ST6) includes the robot 2 that receives the loading operation command loading the workpiece E onto the machine tool 6. The loading step (the sixth step ST6) may be executed in parallel with the first command generation step (the fifth step ST5). More specifically, the robot controller 3 generating part of the loading operation command of the robot 2 and the robot 2 executing, based on the part of the loading operation command, part of the operation to load the workpiece E onto the machine tool 6 may be repeatedly executed step by step from when loading of the workpiece E is started to when loading of the workpiece E is completed.

The loading step (the sixth step ST6) may include (1) the door mover 69 moving the door 68 from the closed position to the open position, (2) the robot 2 that receives the loading operation command loading the workpiece E onto the machine tool 6, and (3) after the workpiece E is loaded onto the machine tool 6, the door mover 69 moves the door 68 from the open position to the closed position.

At a seventh step ST7, the operation commands C (refer to FIG. 6) for controlling the machine tool 6 are generated. The seventh step ST7 is a second command generation step. The second command generation step (the seventh step ST7) includes the numerical controller 5 generating the operation commands C by executing the processing program PM associated with the workpiece E. The second command generation step (the seventh step ST7) includes, for example, generating a moving operation command (C4) that controls the mover 63.

At an eighth step ST8, the workpiece E is processed into the product P. The eighth step ST8 is a processing step. The processing step (the eighth step ST8) includes the machine tool 6 that receives the operation commands C processing the workpiece E into the product P. The processing step (the eighth step ST8) includes, for example, the mover 63 that receives the moving operation command (C4) moving the processing head 61 relative to the work holder 62 to bring the tool T into contact with the workpiece E. The tool T comes into contact with the workpiece E and thus processes the workpiece E.

In the workpiece processing method according to the third embodiment, the workpiece weight data W1 is reflected in the control parameters Q of the robot 2. This makes it possible for the robot controller 3 to more accurately execute the position control of the workpiece E. For example, it is possible for the robot controller 3 to control the operation of the arm 21 taking into consideration, for example, distortion of the arm 21 caused due to the weight of the workpiece E. Additionally, with the control parameters Q being more appropriately set, erroneous detection is less likely to occur regarding detection of a collision between the robot 2 loading the workpiece E and other object.

Furthermore, in the workpiece processing method according to the third embodiment, the operator does not need to manually input the weight of the workpiece E in the robot controller 3. For example, the operator does not need to manually input, every time the kind of the workpiece E is changed, the weight of the workpiece E after the change in the robot controller 3. This reduces the workload of the operator.

Additionally, the workpiece processing method according to the third embodiment may include the step in which the robot 2 unloads the product P from the machine tool 6 (more specifically, from a ninth step ST9 to a fourteenth step ST14 below).

At the ninth step ST9, the volume of the product P is calculated. The ninth step ST9 is a product volume calculation step. In the product volume calculation step, at least one of the numerical controller 5, the simulator 8, and the CAD/CAM system 9 calculates the second volume v2 (in other words, the volume of the product P), based on the shape data of the product P or the processing simulation.

In the example illustrated in FIGs. 19 and 23, in the product volume calculation step (the ninth step ST9), the numerical controller 5 (or the simulator 8) calculates the second volume v2 (in other words, the volume of the product P), based on the processing simulation.

More specifically, the product volume calculation step (the ninth step ST9) includes (1) the numerical controller 5 or the simulator 8 that virtually executes the processing program PM specifying, as a removal part, a part of the workpiece E to be brought into contact with the cutting tool, (2) the numerical controller 5 or the simulator 8 that virtually executes the processing program PM generating the three-dimensional shape data SH2 of the product P obtained by removing the removal part from the workpiece E, and (3) the numerical controller 5 or the simulator 8 that executes the calculation program PG calculating the second volume v2 (in other words, the volume of the product P), based on the three-dimensional shape data SH2 of the product P.

Alternatively, the product volume calculation step (the ninth step ST9) includes (1) the numerical controller 5 or the simulator 8 that virtually executes the processing program PM specifying, as a removal part, a part of the workpiece E to be brought into contact with the cutting tool, (2) the numerical controller 5 or the simulator 8 that executes the calculation program PG calculating the volume of the removal part as a removal volume, and (3) the numerical controller 5 or the simulator 8 that executes the calculation program PG calculating the second volume v2 (in other words, the volume of the product P) by subtracting the volume of the removal part from the first volume v1 (in other words, the volume of the workpiece E).

Further alternatively, as illustrated in FIG. 32, the product volume calculation step (the ninth step ST9) may include the CAD/CAM system 9 calculating the second volume v2, based on the shape data of the product P (more specifically, the three-dimensional shape data SH2 of the product P).

When the calculation of the second volume v2 is performed by the numerical controller 5, the product volume data V2, which indicates the second volume v2, is stored in the memory 52 of the numerical controller 5. When the calculation of the second volume v2 is performed by the simulator 8, the product volume data V2, which indicates the second volume v2, is stored in the third memory 82 of the simulator 8. When the calculation of the second volume v2 is performed by the CAD/CAM system 9, the product volume data V2, which indicates the second volume v2, is stored in the fourth memory 92 of the CAD/CAM system 9.

When the calculation of the second volume v2 is performed by the simulator 8 or the CAD/CAM system 9, the product volume data V2, which indicates the second volume v2, may be transmitted from the simulator 8 or the CAD/CAM system 9 to the numerical controller 5. In this case, the product volume data V2 is stored in the memory 52 of the numerical controller 5. The product volume data V2 may be transmitted from the numerical controller 5 to the robot controller 3 (refer to an eleventh step ST11 to be described later). In this case, the product volume data V2 is stored in the second memory 32 of the robot controller 3.

At a tenth step ST10, the second weight w2 (in other words, the weight of the product P) is calculated. The tenth step ST10 is a product weight calculation step. In the product weight calculation step, at least one of the robot controller 3, the numerical controller 5, the simulator 8, and the CAD/CAM system 9 calculates the second weight w2, based on the product volume data V2 and the product density data D2. Note that, the product density data D2 is generally the same as the workpiece density data D1.

When the calculation of the second weight w2 is performed by the numerical controller 5, the product weight data W2, which indicates the second weight w2, is stored in the memory 52 of the numerical controller 5. When the calculation of the second weight w2 is performed by the robot controller 3, the product weight data W2, which indicates the second weight w2, is stored in the second memory 32 of the robot controller 3. When the calculation of the second weight w2 is performed by the simulator 8, the product weight data W2, which indicates the second weight w2, is stored in the third memory 82 of the simulator 8. When the calculation of the second weight w2 is performed by the CAD/CAM system 9, the product weight data W2, which indicates the second weight w2, is stored in the fourth memory 92 of the CAD/CAM system 9.

When the calculation of the second weight w2 is performed by the simulator 8 or the CAD/CAM system 9, the product weight data W2, which indicates the second weight w2, is transmitted from the simulator 8 or the CAD/CAM system 9 to the numerical controller 5. In this case, the product weight data W2 is stored in the memory 52 of the numerical controller 5. When the calculation of the second weight w2 is performed by those other than the robot controller 3, the product weight data W2 is transmitted from the numerical controller 5 to the robot controller 3 (refer to the eleventh step ST11 to be described later). In this case, the product weight data W2 is stored in the second memory 32 of the robot controller 3.

Note that, the product volume calculation step (the ninth step ST9) may be executed at a point in time close to the point in time at which the workpiece volume calculation step (the first step ST1) is executed, and the product weight calculation step (the tenth step ST10) may be executed at a point in time close to the point in time at which the workpiece weight calculation step (the tenth step ST10) is executed. For example, the product volume calculation step (the ninth step ST9) and the product weight calculation step (the tenth step ST10) may be executed before the data transmission step (the third step ST3).

At the eleventh step ST11, data is transmitted from the numerical controller 5 to the robot controller 3. The third step ST3 is a second data transmission step.

The second data transmission step (the eleventh step ST11) includes transmitting at least one of the second basic data A2 (refer to FIG. 12) for calculating the second weight w2 and the product weight data W2 (refer to FIG. 11) from the numerical controller 5 to the robot controller 3.

The second basic data A2 includes, for example, the product volume data V2. When the second basic data A2 is transmitted from the numerical controller 5 to the robot controller 3, the second data transmission step (the eleventh step ST11) is executed before the product weight calculation step (the tenth step ST10). Additionally, in the product weight calculation step (the eleventh step ST11), the robot controller 3 calculates the second weight w2, based on the product volume data V2 and the product density data D2.

When the product weight data W2 is transmitted from the numerical controller 5 to the robot controller 3, the second data transmission step (the eleventh step ST11) is executed after the product weight calculation step (the tenth step ST10).

As illustrated in FIG. 34, the second data transmission step (the eleventh step ST11) may include transmitting, from the numerical controller 5 to the robot controller 3, the fourth data DT4, which specifies the external dimension of the product, and/or the fifth data DT5, which specifies the external dimension of the component of the machine tool. Additionally, the second data transmission step (the eleventh step ST11) may include transmitting, from the numerical controller 5 to the robot controller 3, the sixth data DT6, which identifies the holder from which the product P is to be removed.

The second data transmission step (the eleventh step ST11) may be performed after the data transmission step (the third step ST3) or at the same point in time as the data transmission step (the third step ST3). For example, the second data transmission step (the eleventh step ST11) may be included in the data transmission step (the third step ST3). In this case, in the data transmission step (the third step ST3), data including the workpiece weight data W1, the product weight data W2, the first data DT1, the second data DT2, the third data DT3, the fourth data DT4, the fifth data DT5, and the sixth data DT6 may be transmitted from the numerical controller 5 to the robot controller 3.

At a twelfth step ST12, the robot controller 3 sets data for controlling the unloading operation of the robot 2. The twelfth step ST12 is a second setting step.

In the example illustrated in FIG. 10, the second setting step (the twelfth step ST12) includes the robot controller 3 setting the product weight data W2 as one of the control parameters Q of the robot 2. As illustrated in FIG. 10, the control parameters Q may include the weight data of each of the structures to be mounted on the distal end arm 21e.

The second setting step (the twelfth step ST12) may include the robot controller 3 setting the unloading path data 327, based on the above-described fourth data DT4, the above-described fifth data DT5, and the above-described sixth data DT6.

The second setting step (the twelfth step ST12) may be performed after the first setting step (the fourth step ST4) or at the same point in time as the first setting step (the fourth step ST4). For example, in the first setting step (the fourth step ST4), setting the workpiece weight data W1 as one of the control parameters Q of the robot 2 and setting the product weight data W2 as one of the control parameters Q of the robot 2 may both be performed.

At a thirteenth step ST13, an unloading operation command is generated. The thirteenth step ST13 is a third command generation step. The third command generation step (the thirteenth step ST13) includes the robot controller 3 generating the unloading operation command, based on the control parameters Q that reflect the product weight data W2 and the unloading path data 327. The third command generation step (the thirteenth step ST13) may include, when the gripper 23 grips the product P (more specifically, at any point in time within a period from immediately before the gripper 23 starts a gripping operation of the product P to immediately after the gripper 23 completes the gripping operation of the product P), the robot controller 3 switching the state of the product weight data W2, which is one of the control parameters Q, from the non-active state to the active state. After the state of the product weight data W2 is switched to the active state, the robot controller 3 generates the unloading operation command of the robot 2, based on the control parameters Q in which the product weight data W2 is activated and the unloading path data 327, which specifies the unloading path of the product P.

At the fourteenth step ST14, the product P is unloaded from the machine tool 6. The fourteenth step ST14 is an unloading step. The unloading step (the fourteenth step ST14) includes the robot 2 that receives the unloading operation command unloading the product P from the machine tool 6. The unloading step (the fourteenth step ST14) may be executed in parallel with the third command generation step (the thirteenth step ST13). More specifically, the robot controller 3 generating part of the unloading operation command of the robot 2 and the robot 2 executing, based on the part of the unloading operation command, part of the operation to unload the product P from the machine tool 6 may be repeatedly executed step by step from when unloading of the product P is started to when unloading of the product P is completed.

It should be clearly understood that the present invention is not limited to the above-described embodiments or modifications, and each of the embodiments or modifications may be deformed or modified as required within the range of the technical ideas obtainable from the present invention. Various techniques used in each of the embodiments or modifications may be applied to other embodiments or modifications unless a technical contradiction arises. Furthermore, any optional configuration in each of the embodiments or modifications may be omitted as required.

For example, in the embodiments, the robot 2 may be a non-autonomous robot or may be an autonomous robot. Further, in the embodiments, the machine tool 6 is not particularly limited in kind. The machine tool 6 may include a lathe, a machining center, or a multitasking machine. The machine tool 6 may include an additive manufacturing apparatus.

### Description of Reference Numerals

1 ... Machine tool system, 2 ... Robot, 3 ... Robot controller, 5 ... Numerical controller, 6 ... Machine tool, 8 ... Simulator, 9 ... CAD/CAM system, 21 ... Arm, 21e ... Distal end arm, 23 ... Gripper, 23w ... Weight data of gripper, 24 ... Second gripper, 24w ... Weight data of second gripper, 25 ... Acceleration sensor, 30 ... Second processor, 32 ... Second memory, 35, 35a, 35b ... Second communication circuit, 36 ... Second inputter, 37 ... Second display, 38 ... Second bus, 50...hardware processor, 52 ... Memory, 55, 55a, 55b ... Communication circuit, 56...inputter, 57 ... Display, 58...bus, 61 ... Processing head, 61T ... Turret, 62 ... Work holder, 63 ... Mover, 65 ... Second work holder, 67 ... Wall, 68 ... Door, 69 ... Door mover, 80 ... Third processor, 82 ... Third memory, 85 ... Third communication circuit, 86 ... Third inputter, 87 ... Third display, 90 ... Fourth processor, 92 ... Fourth memory, 95 ... Fourth communication circuit, 96 ... Fourth inputter, 97 ... Fourth display, 100 ... Processing system, 230 ... Robot hand, 240 ... Second robot hand, 326..loading path data, 327 ... Unloading path data, 529 ... Processing calculation program, 572 ... Display with touch panel, 928 ... Drawing program, A1 ... First basic data, A2 ... Second base data, C ... Operation command, C1 ... First operation command, C2 ... Second operation command, C3 ... Third operation command, C4 ... Fourth operation command, C5 ... Fifth operation command, C6 ... Sixth operation command, D1 ... Workpiece density data, D2 ... Product density data, DA2 ... Data that specifies kind of processing tool, DA3 ... Data that specifies processing range, DA4 ... Data that specifies processing speed, DT1 ... First data that specifies external dimension of workpiece, DT2 ... Second data that specifies external dimension of components of machine tool, DT3 ... Third data that identifies holder, DT4 ... Fourth data that specifies external dimension of product, DT5 ... Fifth data that identifies external dimension of components of machine tool, DT6 ... Sixth data that identifies holder, E ... Workpiece, J ... Transport operation command, M1 ... First calculation mode, M2 ... Second calculation mode, M3 ... Third calculation mode, M4 ... Fourth calculation mode, MA ... Processing program generation mode, OP ... Opening, P ... Product, PG ... Calculation program PG2 ... Second calculation program, PM ... Processing program, PM1 ... EIA program, Q ... Control parameter, SD ... Shape data, SD1 ... Outer diameter of workpiece, SD2 ... Inner diameter of workpiece, SD3 ... Height of workpiece, SH1 ... Three-dimensional shape data of workpiece, SH2 ... Three-dimensional shape data of product, T ... Tool, T1 ... Cutting tool, T2 ... Tool, V1 ... Workpiece volume data, V2 ... Product volume data, W1 ... Workpiece weight data, W2 ... Product weight data, m1 ... Data that specifies material included in workpiece, m2 ... Data that specifies material included in product, r1 ... Associated data that associates a plurality of materials and densities of the plurality of materials

## Claims

1. A processing system comprising:
a robot configured to load a workpiece onto a machine tool;
a robot controller configured to, when a weight of the workpiece is defined as a first weight, set workpiece weight data indicating the first weight as one of control parameters of the robot, and control a loading operation of the robot, based on the control parameters and loading path data that specifies a loading path of the workpiece;
a numerical controller configured to transmit the workpiece weight data or first basic data for calculating the first weight to the robot controller and generate an operation command by executing a processing program; and
the machine tool configured to process the workpiece into a product, based on the operation command.

2. The processing system according to claim 1,
wherein the numerical controller is configured to transmit the workpiece weight data to the robot controller, and
wherein the robot controller is configured to set the workpiece weight data acquired from the numerical controller as one of the control parameters.

3. The processing system according to claim 1 or 2,
wherein the robot is configured to unload the product from the machine tool,
wherein the numerical controller is configured to, when a weight of the product is defined as a second weight, transmit product weight data indicating the second weight or second basic data for calculating the second weight to the robot controller, and
wherein the robot controller is configured to set the product weight data indicating the second weight as one of the control parameters of the robot, and control an unloading operation of the robot, based on the control parameters including the product weight data and unloading path data that specifies an unloading path of the product.

4. The processing system according to any one of claims 1 to 3, wherein at least one of the robot controller and the numerical controller is configured to, when a volume of the workpiece is defined as a first volume and a density of a material constituting the workpiece is defined as a first density, execute a first calculation mode that calculates the first weight, based on workpiece volume data indicating the first volume and workpiece density data indicating the first density.

5. The processing system according to claim 4, wherein the numerical controller is configured to execute a second calculation mode that calculates the first volume, based on shape data of the workpiece to be used to generate the processing program.

6. The processing system according to claim 4, wherein the numerical controller is configured to execute a second calculation mode that calculates the first volume, based on shape data of the workpiece to be generated by execution of a processing simulation.

7. The processing system according to claim 5 or 6, wherein the numerical controller is configured to execute a processing program generation mode that generates the processing program, based on the shape data of the workpiece, data that specifies a kind of a processing tool, data that specifies a processing range, and data that specifies a processing speed.

8. The processing system according to claim 3, wherein at least one of the robot controller and the numerical controller is configured to, when a volume of the product is defined as a second volume and a density of a material constituting the product is defined as a second density, execute a third calculation mode that calculates the second weight, based on product volume data indicating the second volume and product density data indicating the second density.

9. The processing system according to claim 8,
wherein the numerical controller is configured to execute a processing simulation that virtually processes the workpiece, and
wherein the numerical controller is configured to execute a fourth calculation mode that calculates the second volume, based on of the processing simulation.

10. The processing system according to claim 3,
wherein the robot is configured to execute loading of the workpiece onto the machine tool and unloading of the product from the machine tool in parallel,
wherein the robot controller is configured to set each of the workpiece weight data indicating the first weight and the product weight data indicating the second weight as one of the control parameters, and
wherein the robot controller is configured to, when the robot is supporting both the workpiece and the product, control operation of the robot, based on the control parameters that reflect both the workpiece weight data and the product weight data, and the loading path data or the unloading path data.

11. A machine tool system comprising:
a machine tool configured to receive a workpiece from a robot controlled by a robot controller and process the workpiece into a product, based on an operation command received from a numerical controller; and
the numerical controller configured to, when a weight of the workpiece is defined as a first weight, transmit workpiece weight data indicating the first weight or first basic data for calculating the first weight to the robot controller such that the workpiece weight data is set as one of the control parameters of the robot, and generate the operation command by executing a processing program.

12. The machine tool system according to claim 11,
wherein, when a volume of the workpiece is defined as a first volume and a density of a material constituting the workpiece is defined as a first density, the numerical controller is configured to execute
a second calculation mode that calculates the first volume, based on shape data of the workpiece to be used to generate the processing program or shape data of the workpiece generated by executing a processing simulation, and
a first calculation mode that calculates the first weight, based on workpiece volume data indicating the first volume and workpiece density data indicating the first density, and
wherein the numerical controller is configured to transmit the workpiece weight data to the robot controller.

13. The machine tool system according to claim 11,
wherein, the numerical controller is communicable with at least one of a simulator and a CAD/CAM system, and
wherein the numerical controller is configured to, when a volume of the workpiece is defined as a first volume, receive, from at least one of the simulator and the CAD/CAM system, the processing program and at least one of workpiece volume data indicating the first volume and the workpiece weight data.

14. A workpiece processing method comprising:
calculating, by at least one of a robot controller, a numerical controller, a simulator, and a CAD/CAM system, a volume of a workpiece, based on shape data of the workpiece;
calculating, by at least one of the robot controller, the numerical controller, the simulator, and the CAD/CAM system, a weight of the workpiece, based on the volume of the workpiece that has been calculated and workpiece density data indicating a density of a material constituting the workpiece;
setting, by the robot controller, the weight of the workpiece that has been calculated as one of control parameters of a robot;
generating, by the robot controller, a loading operation command, based on the control parameters and loading path data;
loading, by the robot that receives the loading operation command, the workpiece onto a machine tool;
generating, by the numerical controller, an operation command by executing a processing program associated with the workpiece; and
processing, by the machine tool that receives the operation command, the workpiece into a product.

15. The workpiece processing method according to claim 14, further comprising:
calculating, by at least one of the numerical controller, the simulator, and the CAD/CAM system, a volume of the product, based on shape data of the product or a processing simulation;
calculating, by at least one of the robot controller, the numerical controller, the simulator, and the CAD/CAM system, a weight of the product, based on the volume of the product that has been calculated and product density data indicating a density of a material constituting the product;
setting, by the robot controller, the weight of the product that has been calculated as one of the control parameters of the robot;
generating, by the robot controller, an unloading operation command, based on the control parameters and unloading path data; and
unloading, by the robot that receives the unloading operation command, the product from the machine tool.
